# EUROPÄISCHE PATENTSCHRIFT

(11) **EP 1 481 616 B1**
(45) Veröffentlichungstag und Bekanntmachung des Hinweises auf die Patenterteilung: **03.08.2005**
(21) Anmeldenummer: 04012435.6
(22) Anmeldetag: 26.05.2004
(51) Int. Cl.: A47D 13/02, B62B 9/12, B60N 2/28

(54) **Kindersitz**
Baby seat
Siège de bébé

(30) Priorität: 26.05.2003 DE 20308359 U; 07.08.2003 DE 20315461 U
(43) Veröffentlichungstag der Anmeldung: 01.12.2004
(73) Patentinhaber: Beger, Udo, 84030 Ergolding (DE)
(72) Erfinder: Beger, Udo, 84030 Ergolding (DE)
(74) Vertreter: Eichstädt, Alfred, Dipl.-Ing.

(56) Entgegenhaltungen:
- EP-A- 0 519 857
- GB-A- 2 306 312
- US-A- 4 274 674
- US-A- 4 344 649

## Beschreibung

Die Erfindung betrifft einen Kindersitz, der universell einsetzbar ist.

Kindersitze, insbesondere Kindersicherheitssitze für die Befestigung auf einem Fahrzeugsitz eines Kraftfahrzeuges, sind in verschiedensten Ausführungen bekannt. Es sind auch Autokindersicherheitssitze bekannt, die einen Basisträger aufweisen, in welchem im Neigungswinkel verstellbar eine Rückenlehne und ein Sitzteil angeordnet sind. Diese Sitze lassen sich auch als sogenannte Reboardsitze verwenden, d. h., dass entgegengesetzt der Fahrtrichtung das Kleinkind in einen solchen Sitz gesetzt werden kann. Der die Rückenlehne untergreifende und hieran befestigte Schultergurt des Dreipunktsicherheitsgurtes sichert dabei den Sitz. Ferner sind an dem Basisträger Führungen und/oder Befestigungsmittel für den Beckengurt des Sicherheitsgurtes vorgesehen.

Es ist ferner bekannt, Kindersitze als sogenannte Babyträger auszubilden. Beispielhaft wird hier auf die DE 42 08 599 C2, EP 0 371 524 A1, DE 34 39 679 A1 und EP 0 218 444 B1 verwiesen. Es handelt sich dabei um tragbare Schalensitze, die Seitenwände aufweisen, die an der Unterseite gebogen sind, um eine Wippenwirkung zu erreichen. An den Seitenwänden ist ein Tragebügel schwenkbar befestigt, der in verschiedene Schwenkstellungen verbringbar ist. Zum Tragen des Babyträgers ist dieser Bügel nach oben geschwenkt und arretiert. Bei der Verwendung als Autokindersitz ist der Bügel abgeschwenkt, ebenso bei der Aufstellung als Babyträger auf einen Aufstellboden. Die Schalensitzteile sind fest integriert.

Es ist ferner bekannt, einen Kindersitz einteilig als Schalensitz auszubilden und an einem Kinderwagengestell zu befestigen.

Darüber hinaus ist es allgemein bekannt, bei Kinderwagengestellen Befestigungseinrichtungen, insbesondere Längsträger mit Halteeinrichtungen vorzusehen, um daran Sportwagen- und/oder Liegewagenauf- oder -einsätze befestigen zu können. Zu diesem Zweck weisen die Träger senkrechte und/oder in Längsrichtung schlitzförmige Aufnahmen für seitlich vorstehende Bolzen an den Sportwagen- oder Liegewageneinsätzen sowie Verriegelungselemente auf, um einen gesicherten Halt zu gewährleisten.

Aus der DE 199 34 074 A1 ist eine Vorrichtung zum Verbinden eines Autokindersitzes mit einem herkömmlichen Radgestell eines Kinderwagens bekannt und weist ein Untergestell auf, das rückseitig zur Fixierung an dem Autositz mittels eines Dreipunktsicherheitsgurtes in den Seitenwänden Ausnehmungen aufweist, durch die die Becken- und Schultergurtabschnitte des Dreipunktsicherheitsgurtes hindurchgeführt werden können. Auf das Untergestell ist ein in Form eines Schalensitzes ausgebildeter Sitzkörper aufgesetzt und hieran befestigt. Dieser Sitzkörper weist einen Sitzabschnitt und einen Rückenlehnenabschnitt auf, die beide einteilig aus Kunststoff ausgeformt sind.

Eine Umwandlung dieses Sitzes in einen Liegewageneinsatz, in welchem ein Kleinkind ausgestreckt liegen kann, ist nicht möglich. Es ist lediglich eine relative Neigungswinkelverstellung des Sitzes insgesamt am Untergestell vorgesehen. Am Kinderwagengestell sind Haltevorrichtungen vorgesehen, um das Untergestell des Autokindersitzes befestigen zu können.

Aus der EP 0 009 439 B1 ist ein Autokindersicherheitssitz bekannt, bei dem die Rückenlehne gegenüber dem Sitzteil neigbar ausgeführt ist. Der Sitzteil ist als Halbschale ausgeführt, ebenso die Rückenlehne. Die Rückenlehne ist hinter dem Sitzteil angeordnet, über seitliche Halteplatten am Sitzteil befesitigt gegenüber dem Sitzteil verschwenkbar. Aufgrund der Gestaltungsform ist zwar eine Neigungswinkelverstellung der Rückenlehne möglich, eine waagerechte Liegefläche ist jedoch nicht herstellbar. Des weiteren verschiebt sich der Schwerpunkt der Sitzanordnung bei heruntergeklappter Rückenlehne nach hinten, so dass eine Nutzung als Babyträger nicht möglich ist. Ferner sind keine Adapter vorgesehen, um eine Befestigung an einem Kinderwagengestell zu ermöglichen.

Aus der EP 0 982 181 A2 ist ein Adapter für einen Autokindersitz, der wahlweise im Auto und auch außerhalb eines Kraftfahrzeuges verwendet werden kann, bekannt, der derart gestaltet ist, dass er für eine vielfältige Kombination von Kinderwagengestellen und Kinderautositzen verwendet werden kann. Der Adapter weist Seitenwände auf, die über verbindende Stützelemente vorne und hinten miteinander verbunden sind. Die Stützelemente sind für den einzusetzenden Autokindersitz als Träger vorgesehen. Der Autokindersitz wird gegen den Adapter durch Sicherungselemente, die gespannt werden, gepresst und stützt sich mit seiner Unterseite auf den beiden Querstangen ab. Ein Kippen ist nicht möglich. Dieser Adapter wird mittels seitlich abgewinkelter Bügel an einem Kinderwagengestell befestigt.

Aus der DE 93 12 751 U1 ist weiterhin ein Fahrzeugkindersitz bekannt, der als Einschalensitz ausgebildet ist und an einem Untergestell, das auf den Fahrzeugsitz aufstellbar ist, verschwenkbar gelagert ist. An dem L-förmigen Untergestell, das sich einerseits mit dem unteren Teil auf der Sitzfläche und mit dem zweiten Abschnitt an der Rückenlehne des Fahrzeuges abstützt, sind Mittel zum Verschwenken und Arretieren des einschaligen Kindersitzes vorgesehen. Aufrund der Konstruktion ist eine universelle Verwendung als Sportwagenaufsatz oder als Kinderliegewagenaufsatz nicht möglich.

Aus der DE 35 37 123 A1 ist eine Rückhaltevorrichtung für eine Kinderschalenliege bekannt. Diese Rückhaltevorrichtung weist ein Rundgestell auf, in das die Kinderschalenliege einsetzbar und darin verschwenkbar ist. Das Grundgestell ist ein Schalenkörper, der vorderseitige und rückseitige Querwände aufweist. An diesem sind Führungs- und Befestigungsmittel für einen Fahrzeuggurt vorgesehen. Durch die Anordnung ist ein leichtes Entnehmen und Arretieren der Kinderschalenliege möglich, ohne diese selbst mittels der Fahrzeuggurte fixieren zu müssen.

Aus der FR 2 693 412 ist ein Kindersitz bekannt, der aus zwei Schalenteilen besteht. Die beiden Schalenteile können also wahlweise zu einem Kindersitz oder zu einem Babyträger, in welchem das Kleinkind liegend transportiert werden kann, zusammengeschraubt werden.

Ausgehend vom Stand der Technik liegt der Erfindung die Aufgabe zugrunde, einen Kindersitz so auszugestalten, dass er universell sowohl als Autokindersicherheitssitz als auch als Sportwagensitzeinsatz und als Liegewageneinsatz für Kinderwagen verwendbar ist.

Die Aufgabe löst die Erfindung durch Ausgestaltung eines Kindersitzes gemäß der im Anspruch 1 angegebenen technischen Lehre.

Vorteilhafte Ausgestaltungen des Kindersitzes nach der Erfindung sind in den Unteransprüchen 2 bis 39 angegeben, die Verwendung durch maßstabsentsprechende Ausgestaltung für Puppen in dem Anspruch 41.

Durch Ausgestaltung des Kindersitzes nach der Erfindung kann dieser universell eingesetzt werden, nämlich als Kindersicherheitssitz für Kleinkinder auf einem Sitz in einem Kraftfahrzeug, und zwar sowohl als Reboardsitz als auch als Kindersicherheitssitz in Fahrtrichtung, und als Kinderwageneinsatz, Sportwageneinsatz und als Babyträger. Der U-förmige Träger ist dazu auf den Fahrzeugsitz - in entsprechender Richtung ausgerichtet - aufzustellen und kann mittels Adapter oder der vorhandenen Sicherheitsgurte des Fahrzeugsitzes befestigt werden. Vorgesehene bekannte Hosenträgergurt- und Schrittgurtsysteme an dem Kindersitz sichern das Kleinkind hierin.

Durch die schwenkbewegliche Anordnung sowohl des Rückenlehnen- als auch des Sitzteiles in dem U-förmigen Träger können diese Teile so in ihren Neigungswinkeln verstellt werden, dass eine Sitzposition, eine Relaxposition aber auch eine Liegeposition eingenommen werden kann. Bei Anbringung von Befestigungsmitteln für einen Beckengurt eines Dreipunktsicherheitsgurtes, nämlich quer zur Längsrichtung des Trägers an der Unterseite des Trägers oder an einer Seitenwand, kann der Sitz auch als Liegebett in einem Fahrzeug, z. B. auf dem Rücksitz, quer aufgestellt und befestigt werden.

Die Neigungswinkelverstellung zwischen Sitzteil und Rückenlehnenteil kann auch durch die Mitkopplung erfolgen, wenn der Sitzteil mit seinem hinteren Ende schwenkbeweglich am Rückenlehnenteil unten angelenkt ist und der Rückenlehnenteil um eine im unteren Bereich befindliche Schwenkachse an den Seitenwänden des Trägers verschwenkbar gelagert ist. Wird die Rückenlehne im Neigungswinkel verstellt, so erfolgt automatisch eine Bewegungstransformation auf den Sitzteil. Dieser ist zweckmäßigerweise über Bolzen in Führungsnuten in den Seitenwänden geführt gelagert, so dass keine weiteren Sicherungen für den Sitzteil erforderlich sind, um diesen in der jeweiligen Schrägposition zu halten. Die Rückenlehne ist im unteren Bereich oder an den Seitenwänden um eine Schwenkachse am U-förmigen Träger drehbar befestigt, während beabstandet hierzu auf einem Kreisbogen verlaufend Feststellmittel für eine stufenlose oder rastende Festlegung der Schrägstellungen oder in der unteren geraden Position vorgesehen sind. Diese Feststellmittel können in einer Führungskulisse oder Leitkurve in Bogenform eingreifen oder hindurchgesteckt sein. Ferner können auch auf Kreisbögen beabstandet Rastbohrungen in den Seitenwänden eingebracht sein, in die zur Sicherung federbelastete, seitlich an der Rückenlehne vorstehende Bolzen einrasten, die durch Druck von außen auch wieder aus den Rastbohrungen ins Innere der Lager an der Rückenlehne hineingedrückt werden können, um so eine weitere Verstellung zu ermöglichen. Rastbohrungen und Führungskulissen können auch miteinander kombiniert sein, auch können Bolzen als Drucktaster ausgebildet sein, um eine leichte Bedienung zu ermöglichen.

Die Schwenklager der Rückenlehne an den Seitenwänden des Trägers können zugleich auch die Lager eines verschwenkbaren Tragebügels sein, so dass der Sitz auch als Babyträger nutzbar ist. Dieser Tragebügel kann auch gesondert gelagert sein und als Prallschutzbügel oder auch als Sicherungsbügel dienen. Der Tragebügel und die Verstellmöglichkeiten in verschiedene Schwenkpositionen sind an sich bekannt.

Der erfindungsgemäß vorgesehene Tragebügel hat zudem den Vorteil, dass er zugleich auch als Sicherungselement verwendet werden kann, wenn der Kindersitz nach der Erfindung auf Halteelemente aufgesetzt wird, die an einem Kinderwagengestell oder an einem Adapter auf einem Kraftfahrzeugsitz vorgesehen sind. Zur Realisierung einer solchen Befestigungseinrichtung sind an den Seitenwänden des Trägers unter den Lagerschalen des an den Lagerstellen an den Seitenwänden schwenkbar gelagerten Tragebügels Führungen oder Führungskanäle zur Aufnahme von nach oben stehenden Halteelementen an Trägerelementen in einem Fahrgestell eines vier- oder dreirädrigen Kinder- oder Puppenwagens oder an Halteelementen an einem auf einen Fahrzeugsitz aufstellbaren Adapter mit Konnektoren zur Fixierung an Haltern eines ISOFIX-Befestigungssystems am Fahrzeugsitz angebracht. An mindestens einer Lagerschale, vorzugsweise aber an beiden Lagerschalen, eines Tragebügels sind Befestigungsmittel, beispielsweise in Form von an den Mantelflächen hervorstehenden Haken, vorgesehen, die beim Verbringen des Tragebügels aus der senkrechten Position in eine Schwenkstellung mit korrespondierenden Befestigungsmitteln an den zugeordneten Halteelementen derart zusammenwirken, dass der Träger an dem Halteelement gegen Abzug gesichert gehalten und nur durch Zurückschwenken des Tragebügels in die Trageposition von den Halteelementen abhebbar ist. Die mit den hakenförmigen Befestigungsmitteln korrespondierenden Befestigungsgegenmittel können beispielsweise aus einem Bolzen, einem hinterschnittenen Ansatz, einem Niet und dergleichen bestehen, der in das Halteelement eingesetzt ist. Das Halteelement selbst weist zweckmäßigerweise einen rechteckförmigen Querschnitt auf und ist als Wandelement ausgebildet. Dieses Halteelement kann zudem an einem Trägerelement, beispielsweise an einem Holm eines Fahrgestells, direkt befestigt sein. Es ist aber auch möglich, insbesondere dann, wenn das Fahrgestell zusammengeklappt werden soll, das Halteelement in eine Lagerfassung lösbar einzusetzen, die ihrerseits an dem Trägerelement, beispielsweise an einem Holm, befestigt ist. Die Lagerfassung weist also eine dem Halteelement querschnittsangepasste Form auf, so dass das Halteelement kippsicher darin gehalten ist. Zur Arretierung kann beispielsweise eine Federlasche in dem Halteelement vorgesehen sein, die mit einem Ansatz in eine Ausnehmung in einer Wand der Lagerfassung arretierend eingreift. Durch Betätigen der Federlasche kann das Halteelement herausgezogen werden, so dass es bei zusammengeklapptem Fahrgestell nicht aus der Holmebene hervorstehen kann. Das Halteelement kann auch hohl ausgebildet sein. Es muss lediglich eine ausreichend große Querschnittsform aufweisen, um eine Kippsicherung und hohe Belastung durch den Kindersitz auffangen zu können. Das Halteelement kann ferner obenseitig eine kreisbogenförmige Lagerschale für die kreisrunde Lagerschale des Tragebügels aufweisen. Der Haken greift dann in den Hohlraum automatisch ein und hintergreift den in dem Hohlraum des Halteelementes vorgesehenen Bolzen oder Niet.

Das Halteelement wird zweckmäßigerweise in einen Führungskanal eingeführt, der an der entsprechenden Außenseite des Trägers angeordnet ist. Anstelle eines solchen Führungskanals können auch Bügel vorgesehen sein, die eine Führung ermöglichen.

Eine Alternative zu der angegebenen Befestigung und Sicherung mittels eines Hakens besteht darin, dass das Halteelement breiter ausgebildet ist als der Durchmesser der Lagerschale des schwenkbaren Tragebügels und dass in dem Halteelement obenseitig eine dem Durchmesser der Lagerschale angepasste Lagerausnehmung mit einer obenseitigen geringeren Öffnungsweite als der Durchmesser vorgesehen ist. Die Lagerschale selbst weist spiegelbildlich zur Längsachse des Schenkels des Tragebügels seitliche Abflachungen auf, die eine Führung mit parallelen Flächen bilden, deren Abstand der obenseitigen Öffnungsweite der Lagerausnehmung entspricht. Nach dem Einsetzen der Lagerschale des Tragebügels in dessen Trageposition wird der Tragebügel verschwenkt und bewirkt, dass durch den längeren Teil der Führung, die dem Durchmesser entspricht, durch Formschluss mit der Lagerausnehmung der Kindersitz automatisch am Halteelement gesichert ist. Um in der Schwenkstellung, beispielsweise beim Verschwenken des Tragebügels in Richtung des Schiebebügels des Kinderwagengestells, weiterhin diesen zu sichern, ist es vorteilhaft, den Tragebügel in dieser Position durch an sich bekannte Mittel zu arretieren. Hierzu kann die Lagerschale beispielsweise mit einem Bolzen innenseitig versehen sein, der in einer Leitkurve mit Raststellen entlang gleitet, die um die Lagerstelle in der Seitenwand oder ein Lagerteil vorgesehen ist, wobei die Lagerschale insgesamt gegenüber der Lagerstelle an der Seitenwand gegen die Kraft einer Feder um einen geringen Hub verschiebbar sein kann.

Die Länge des universell einsetzbaren Trägers ist, bezogen auf den Sitzteil, so gewählt, dass der Sitzteil gegenüber den vorderen Stirnseiten zurückgesetzt ist, wenn er sich in einer aufgestellten Schräglage befindet, so dass der überstehende Bodenteil, durch die Seitenwände begrenzt, eine Fußraste bildet, so dass ein Kleinkind bei der Verwendung des Sitzes als Reboardsitz sich nicht die Füße zwischen der Rückenlehne des Fahrzeugsitzes und den Sitzteil einklemmen kann. In weiterer Ausgestaltung sind auch Abdeckungen und Schutzhauben anbringbar vorgesehen, so dass bei Verwendung des Kindersitzes als Liegewagen- oder Sportwageneinsatz die Füße und Beine und auch der Brustkorb des Kleinkindes durch Abdeckungen geschützt sind. Auch kann eine Kopfschutzhaube angebracht sein, die ebenfalls an dem Rückenlehnenteil, den Seitenwänden des Trägers oder aber auch am umklappbaren Tragebügel befestigt werden kann.

Ein weiterer Vorteil der Erfindung besteht darin, dass alle Teile aus Kunststoff hergestellt und universell auch an unterschiedlichen Kinderwagengestellen befestigt werden können. Es ist auch möglich, durch entsprechende an der Unterseite des Bodens des U-förmigen Trägers vorgesehene Aufschiebe- und Clipteile eine Befestigung an Querstangen eines Kinderwagengestells vorzunehmen. Des Weiteren ist es auch möglich, unterhalb des Sitzteiles und der Rückenlehne einen hohlen Stauraum zu schaffen, um darin Gegenstände für die Versorgung des Kleinkindes deponieren zu können. Es ist auch möglich, einen zweiten Boden vorzusehen, um in den so gebildeten Zwischenraum ein solches Fach zu integrieren.

In einfachster Ausführung ist erfindungsgemäß vorgesehen, dass nur die Rückenlehne schwenkbar in dem U-förmigen Träger gelagert ist, während das Sitzteil aus einem Einlegekeil besteht, der am Boden oder aber auch an den Seitenwänden befestigt werden kann. Dieser Einlegekeil kann aus Hartschaumstoff oder Schaumstoff bestehen oder ein gepolstertes Sitzteil sein. Vorzugsweise sollte es Keilform besitzen und in Richtung zum vorderen Ende des Trägers ansteigend verlaufend ausgebildet sein, um so eine Sitzfläche zu bilden, die bei Nutzung des Sitzes als Reboard-Sitz waagerecht oder leicht geneigt verläuft. Durch den Keil einerseits und durch die Führungsmittel an der Unterseite des Trägers im vorderen Abschnittsbereich des Sitzkeiles andererseits erfolgt ein Höhenausgleich. Ein solcher Höhenausgleich kann auch durch einen zusätzlichen Unterbau erreicht werden, wenn gegenüber der Aufstellfläche auf dem Fahrzeugsitz eine Überhöhung des Trägers gewünscht ist. Dieser Unterbau kann zugleich auch quer verlaufende Aufnahmen für den Beckengurt zum Fixieren des Sitzes auf dem Fahrzeugsitz aufweisen. Es ist auch möglich, anstelle solcher Unterbauten aufstellbare und ggf. auch in der Höhe veränderbare Stützen vorzusehen, die in den Aufstellpositionen mittels Fixiereinrichtung an den Seitenwänden oder unterhalb des Trägers fixierbar sind, so dass eine gewünschte Neigungswinkelverstellung gegeben ist. Letztere Ausführungen sind insbesondere dann von Vorteil, wenn anstelle eines Einlegekeils als Sitzteil nur ein flaches Polster auf dem Boden aufgelegt ist. Es ist ferner möglich, den Endabschnitt des Bodenteils im Sitzbereich in einen anderen Neigungswinkel gegenüber der Sitzfläche verlaufend auszubilden. Wenn in einem solchen Fall eine Wandlung des Sitzes zum Liegewageneinsatz gewünscht ist, empfiehlt es sich, hier durch Einlegen eines Keils einen Höhenausgleich vorzunehmen. Im Fall der Einbringung eines Einlegekeils als Sitzteil muss dieser bei Verwendung als Liegewageneinsatz entfernt werden. Er sollte deshalb auf einfache Weise mit an sich bekannten Mitteln, z.B. mittels Flächenreißverschlusselementen, an dem Boden des Trägers befestigt sein.

In weiterer Ausgestaltung der Erfindung ist vorgesehen, dass an dem Träger, vorzugsweise an der Unterseite, verschiebbare und arretierbare Konnektoren vorgesehen sind, die an ortsfesten Befestigungsvorrichtungen am Fahrzeugsitz oder an der Karosserie im Bereich des Fahrzeugsitzes befestigbar sind. Diese Konnektoren können ausgefahren werden, um mit den Schlosssystemen, die sich an ihren Enden befinden, an Querbolzen von Haltepunkten befestigt werden zu können. Durch eine Spannvorrichtung kann der Träger darauf gegen den Rückensitz des Fahrzeuges gezogen werden und wird automatisch arretiert, so dass der Sitz fest am Fahrzeugsitz montiert ist und ggf. nur noch mittels der vorhandenen Dreipunktsicherheitsgurte zusätzlich gesichert werden kann. Solche Konnektoren sind beispielsweise aus der DE 298 12 471 U bekannt, ferner aus der DE 199 46 579 A1, sowie aus der DE 196 46 621 C. Die verschiebbaren Konnektoren können dabei entweder so angeordnet sein, dass sie an der Seite, an der sich die Rückenlehne befindet, hinausgeschoben werden können oder aber auch auf der anderen Seite, um im Falle der Anordnung des Sitzes als Reboardsitz auf einem Fahrzeugsitz eine sichere Befestigung gewährleisten zu können.

Um den Sitz im Falle der Verwendung als Reboardsitz auch mittels Kraftfahrzeug eigenen Sicherheitsgurten fixieren zu können, deren Befestigungs- und Schlosspunkte für den Beckengurtabschnitt höher liegen als die Sitzoberfläche des Fahrzeugsitzes, auf dem der Kindersitz aufgestellt werden soll, ist alternativ zu einer Fixierung des Beckengurtes bzw. des Beckengurtabschnittes eines Dreipunktsicherheitsgurtes an der Unterseite vorgesehen, dass Führungs- und/oder Befestigungsmittel an den oberen Seiten der Seitenwände, und zwar im vorderen Bereich, in welchem sich das Sitzteil befindet, angeordnet sind. In diese wird der querverlaufende Beckengurt eingelegt. Anstelle einer Führung kann dabei z.B. auch ein Klemmhalter vorgesehen sein, in welchem der Beckengurt eingeklemmt wird. In einer weiteren Alternative hierzu ist vorgesehen, dass, um die oberen Flächen bzw. Kanten der Seitenwände als Armlehnen nutzen zu können, die Führungs- und/oder Befestigungsmittel für den Beckengurt oder Beckengurtabschnitt an dem Tragebügel, nämlich an den Schenkeln der beiden Tragebügel, angebracht sind, und zwar in einer solchen Höhe zum Schwenklager, dass sie in der Gebrauchsstellung oberhalb der Seitenwände liegen. Diese Lösung hat den Vorteil, dass der Tragebügel in eine Schrägstellung verbracht werden kann, in der der Querteil, nämlich der Trageteil des Bügels, zugleich auch an der Rückenlehne des Fahrzeugsitzes anliegen kann. Wenn darüber hinaus die Längenabstimmung gegenüber der Länge des U-förmigen Trägers bzw. seines Bodenteils so gewählt ist, dass auch dieser mit seiner Vorderkante an der Rückenlehne des Fahrzeugsitzes anliegt, so ist eine statische Fixierung insbesondere bei auftretender Beschleunigung gegen die Vorderseite des Kindersitzes gegeben.

Damit nun der Bügel in der bestimmten Schrägstellung während der gesamten Nutzung gehalten ist, sind Anschläge an beiden Seitenwänden vorgesehen, an die die Schenkel anschlagen. Hier können aber auch Rasteinrichtungen vorgesehen sein, um den Bügel in dieser Stellung rastend festzuhalten. Es ist aber auch möglich, das Lager des Bügels mit einem Winkeleinstellmechanismus zu versehen, der es gestattet, den Bügel in verschiedenen Winkelstellungen rastend im Lager zu fixieren. Solche Rasteinstellungen sind beispielsweise aus der DE 42 08 599 C2 bekannt.

Um eine besonders kompakte Bauweise des Trägers zu erreichen, kann dieser auch vorn und hinten eine die Seitenände überstehende Verlängerung am Bodenteil aufweisen, wobei die eine Verlängerung den Trageteil für die heruntergeklappte Rückenlehne bildet. Der andere überstehende Teil kann eine definierte Länge aufweisen, so dass zwischen Sitzteil und Rückenlehne des Fahrzeugsitzes ein größerer Abstand gegeben ist, welcher ausreichend ist, um die Füße des Kleinkindes aufzunehmen. Es versteht sich dabei von selbst, dass die Längendimensionierung insbesondere im vorderen Teil mit der Bügellänge so abzustimmen ist, dass die gewünschte Anlage sowohl des Bügels als auch der vorderen Kante des U-förmigen Trägers gegeben ist.

Um den Kindersitz auch als Liege- und Sportwageneinsatz für Kinderwagengestelle unterschiedlicher Breite und Länge verwenden zu können, können die Befestigungseinrichtungen, die an Fixpunkten der Seitenwände oder des Bodensteiles seitlich vorstehend befestigt sind, auch austauschbar ausgeführt sein. Beispielsweise kann ein Haltebügel angebracht sein, dessen Befestigungsenden durch Löcher hindurch gesteckt und beispielsweise an einem Verstärkungsrücken im Boden oder an der Wand selbst befestigt sind. Der Bügel weist vorstehende bolzenartige Abschnitte auf, die dann zur Befestigung verwendet werden können. Soll nun eine Breitenanpassung erfolgen, so ist es nur erforderlich, den Bügel weiter herauszuziehen und ihn beispielsweise mit Schrauben in dem U-förmigen Träger zu sichern. Soll eine Anpassung an ein Wagengestell mit Halterungen erfolgen, deren Abstand von den Abständen der Bohrungen in den Seitenwänden abweichen, so kann der Bügel durch Kröpfung der Enden diesen Abständen angepasst werden, so dass ein längerer Bügel an denselben Befestigungspunkten angebracht werden kann. Die Endabschnitte sind so ausgebildet, dass sie in die entsprechenden Ausnehmungen der Haltevorrichtung an dem Gestell einhängbar sind.

Die Erfindung wird nachfolgend anhand der in den Zeichnungen dargestellten Ausführungsbeispiele ergänzend erläutert.

In den Zeichnungen zeigen:
- FIG 1: in schematischer Darstellung einen Kindersitz nach der Erfindung in der Seitenansicht,
- FIG 2: den in Figur 1 dargestellten Kindersitz in perspektivischer Darstellung mit Kopfschutzhaube und weiteren Befestigungseinrichtungen,
- FIG 3: einen Kindersitz nach den Figuren 1 und 2, weiterhin mit einer Abdeckung und als Liegewageneinsatz,
- FIG 4: einen Kindersitz mit einem Einlegekeil als Sitzteil,
- FIG 5: einen Kindersitz mit einem Unterbau im Bereich des Sitzteiles und Ausbildung des Bodenverbindungsteils des Trägers als Sitzteil,
- FIG 6: den in FIG 5 dargestellten Kindersitz zur Verwendung als Liegewageneinsatz,
- FIG 7: eine Variante eines Kindersitzes nach der Erfindung in der Seitenansicht mit einem Tragebügel, an dessen Schenkel sich Führungsmittel für einen Beckengurt befinden,
- FIG 8: einen dreirädrigen Kinderwagen mit einem Kindersitz nach der Erfindung mit einer Befestigungseinrichtung, die unter Nutzung des schwenkbaren Tragebügels den Kindersitz an dem Fahrgestell sichert,
- FIG 9: eine schematische Darstellung der in FIG 8 vorgesehenen Befestigungseinrichtung in der entriegelten Stellung,
- FIG 10: eine schematische Darstellung der in FIG 8 vorgesehenen Befestigungseinrichtung in der verriegelten Stellung,
- FIG 11: eine Lagerschale eines Tragebügels mit einem hakenförmigen Befestigungsmittel und
- FIG 12: einen Unteransichtsausschnitt auf einen Kindersitz mit einer Befestigungseinrichtung, wie sie in FIG 8 vorgesehen ist.

Der Kindersitz gemäß den Figuren besteht im Wesentlichen aus einem U-förmigen Träger 1, der ein Bodenteil 22 und Seitenwände 2a, 2b aufweist. Die beiden Seitenwände 2a, 2b sind innenseitig im Wesentlichen gerade ausgebildet und weisen keine Anstoßkanten auf, so dass der Sitzteil 3 und der Rückenlehnenteil 4, die beide Seitenwände 23a, 23b und 11a, 11b aufweisen und beispielsweise als Kunststoffformteil jeweils einteilig ausgebildet sind, eingesetzt werden können, ohne dass die Neigungswinkelverstellung durch entsprechende vorstehende Teile beeinträchtigt wird.

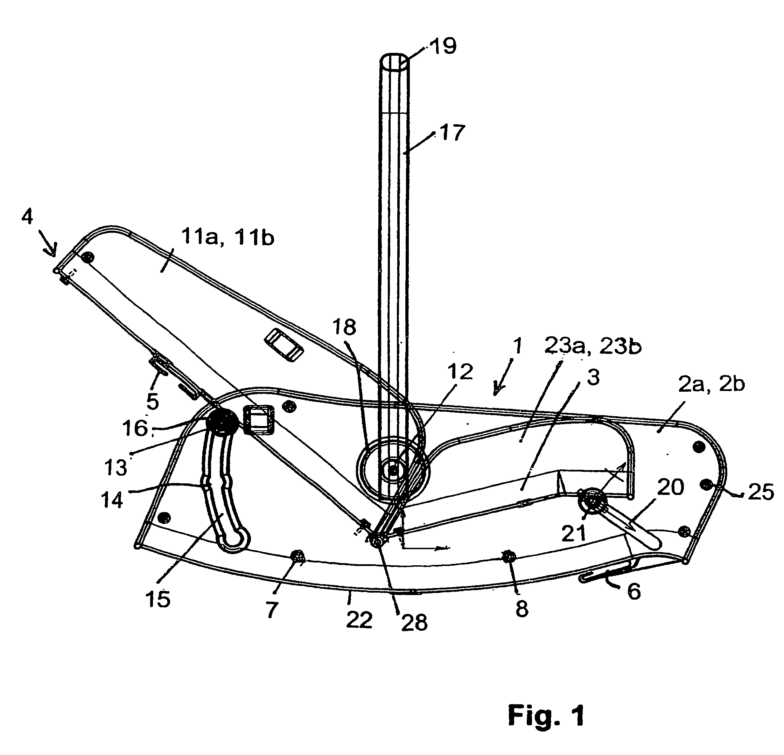

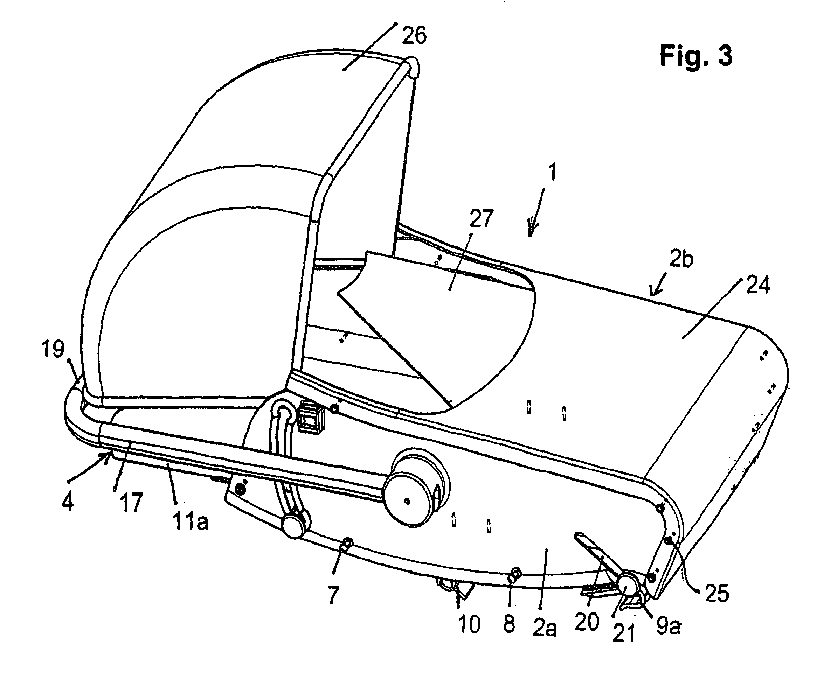

Wie insbesondere aus der Darstellung in Figur 1 ersichtlich ist, sind der Sitzteil 3 und der Rückenlehnenteil 4 über ein Schwenklager 28 miteinander verbunden. Dieses Schwenklager ist am hinteren Ende des Sitzteiles 3 unten- und rückseitig und am unteren Ende des Rückenlehnenteils 4 untenseitig vorgesehen. Über dieses Schwenklager 28 erfolgt auch eine Bewegungstransformation bei Neigungswinkelverstellung des Rückenlehnenteils 4. Der Rückenlehnenteil 4 ist schwenkbeweglich um Lagerstellen 12, die beidseitig in den Seitenwänden 2a, 2b vorgesehen sind und somit eine Schwenkachse bilden, verschwenkbar gelagert. Im Ausführungsbeispiel ist die Lagerstelle 12 zentrisch in dem Lager 18 für den Tragebügel 17 vorgesehen. Die Lagerzylinder des Tragebügels 17 bilden zugleich die Aufstecklager für die Lagerbohrungen in den Seitenwänden 11a, 11b des Rückenlehnenteils 4. Der Tragebügel 17 weist beidseitig und außenseitig an den Seitenwänden 2a, 2b geführte Schenkel auf, die über ein obenseitiges Querteil 19 miteinander verbunden sind. Das Lager 18 ist in bekannter Weise so ausgebildet, dass der Tragebügel 17 in verschiedene Schwenkstellungen verbringbar ist, z. B. aus der dargestellten senkrechten Schwenkstellung in die aus Figur 3 ersichtliche hintere Schwenkstellung, in der der Tragebügel 17 mit dem Querteil einen Prallschutz bildet. Er ist ferner auch nach vorne schwenkbar, und, falls die Schenkel teleskopartig ineinanderschiebbar sind, verkürzbar, so dass er auch als Sicherungsbügel - auf den Oberseiten der Seitenwände 2a, 2b aufliegend - für ein Kind verwendbar ist. Verwendbare Rastverstellungen sind z. B. aus der DE 42 08 599 C2 bekannt.

Die Lagerstelle 12 sowie die Lager 18 sollten zweckmäßigerweise im Schwerpunkt des Gesamtgebildes angebracht sein, um den Kindersitz als Babyträger verwenden zu können.

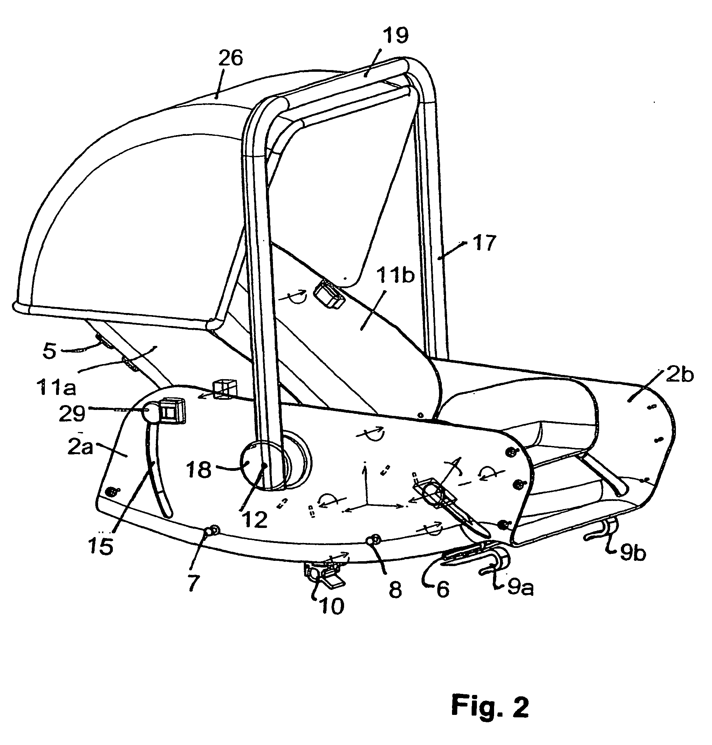

Um den Rückenlehnenteil 4 in der jeweiligen Schrägstellung auch fixieren zu können, sind Rastbolzen 13 vorgesehen. In der Ausführung in Figur 2 ist dies ein Gewindebolzen, auf den eine Spannschraube aufschraubbar ist bzw. eine Spannschraube mit Gewindebolzen, die in eine Gewindebohrung in dem Rückenlehnenteil einschraubbar ist. Dieser Rastbolzen 13 in Figur 1 weist einen Abschnitt auf, der als Führungsabschnitt in der Leitkurve 15 gleitet, die auf einer Radiusbahn zur Lagerstelle 12 angebracht ist. Ein dahinter sich anschließender Abschnitt weist einen größeren Durchmesser auf und rastet automatisch in die als Verbreiterungsstellen in die in die Leitkurve 15 eingebrachten Durchbrüche 14 ein. In Figur 1 ist dies die oberste Stellung. Der Rastbolzen 13 ist gegen eine Feder in einer Lagerungsbohrung in einem Ansatz an der Unterseite des Rückenlehnenteiles 4 gelagert. Beidseitig sind solche Rastbolzen 13 vorgesehen, so dass durch Drücken auf die außenseitig an den Rastbolzen vorgesehenen Druckkappen 16 die Abschnitte mit den größeren Durchmessern aus den Durchbrüchen 14 jeweils gleiten und das Rückenlehnenteil 4 dann nach unten geführt werden kann. Durch die auf die Rastbolzen 13 wirkenden Federkräfte werden diese automatisch in die nächstfolgenden Durchbrüche 14 in den Leitkurven 15 gedrückt. In der unteren Stellung ist der Rückenlehnenteil abgeklappt und nimmt die aus Figur 3 ersichtliche, im Wesentlichen horizontale Position ein, wie sie bei der Verwendung als Liegewageneinsatz in einem Kinderwagengestell erforderlich ist. Der mitgeführte und bewegungsgekoppelte Sitzteil 3 wird ebenfalls im Neigungswinkel verstellt. Er weist zu diesem Zweck seitliche Führungsbolzen 21 auf, die feste Führungsbolzen sein können, z. B. Schraubbolzen, die in ein Lager in der Unterseite des Sitzteiles eingeschraubt sind. Diese Bolzen 21 sind beidseitig vorgesehen und gleiten in Führungsleitkurven 20, die geradlinig und schräg ausgeführt sind, und zwar von vorne nach hinten ansteigend, so dass aus der dargestellten Position beim Einstellen eines geringeren Neigungswinkels des Rückenlehnenteils auch der Neigungswinkel des Sitzteiles 3 gegenüber dem Boden sich verringert. In der unteren Position bilden Rückenlehnenteil 4 und Sitzteil 3 eine ebene Liegefläche, wie aus Figur 3 ersichtlich.

Damit nun der Sitz als Kindersicherheitssitz und auch als Reboardsitz verwendbar ist, sind, wie aus den Figuren ersichtlich, an der Unterseite des Bodenteils 22 im Bereich des Sitzteiles 3 querverlaufende Führungsmittel 6 vorgesehen, in die ein Beckengurt eines Dreipunktsicherheitsgurtes, z. B. des Beifahrersitzes, in einem Fahrzeug eingehängt wird. Der Sitz befindet sich dann in der Reboardaufstellposition. Der Schultergurt des Dreipunktsicherheitsgurtes wird zur weiteren Sicherung des Kindersitzes durch die an der Rückseite des Rückenlehnenteils 4 sich befindenden querverlaufenden Führungsmittel 5 eingeführt. Diese weisen entsprechende Einführschlitze auf und sind hakenförmig ausgeführt, so dass der Sicherheitsgurtabschnitt nicht ohne Zwangsführung herausgleiten kann. Der Kindersitz ist also in dieser Position gesichert gehalten. Zusätzlich kann der Tragebügel 17 nach links verschwenkt werden und bildet einen zusätzlichen Prallschutz bei normalen Bremsungen und kann sich beispielsweise am Armaturenbrett eines Fahrzeuges abstützen. Es versteht sich von selbst, dass der aus Kunststoff geformte Sitzteil 3 und der Rückenlehnenteil 4 eine geschäumte Einlage aufweisen und innenseitig gepolstert sein sollten. Auch kann der Träger einteilig aus Kunststoff gefertigt sein. Bei dünnwandiger Ausführung der Teile sollten Randverstärkungen vorgesehen sein, die durch drei Striche in Figur 1 verdeutlicht sind.

Zur Befestigung des U-förmigen Trägers 1 am Kinderwagengestell sind seitlich Bolzen 7 und 8 vorgesehen, die in den Figuren 2 und 3 deutlich sichtbar sind. Diese Bolzen 7, 8 sind mit Abzugssicherungen versehen und können in Schlitze auf Trägern des Wagengestells eingesetzt und daran in bekannter Weise gesichert werden.

Anstelle solcher Befestigungen können aber auch Aufrast- und Clipbefestigungen vorgesehen sein. Dies ist aus den Figuren 2 und 3 ersichtlich. Mittels der Befestigungseinrichtung 9a und 9b ist der Sitz auf einen Querholm eines Wagengestells aufschiebbar, mittels der weiterhin vorgesehenen Befestigungseinrichtung 10, die als Cliphalter vorgesehen ist, an einem parallelen Querholm lösbar befestigbar.

Aus Figur 1, aber auch aus den Figuren 2 und 3, ist ersichtlich, dass der Führungsbolzen 21 nicht extra fixiert werden muss. Bei der Mitkopplung über das Schwenklager 28 ist eine zusätzliche Befestigung nicht erforderlich.

Das Ausführungsbeispiel in Figur 2 unterscheidet sich von dem in Figur 1 ferner dadurch, dass anstelle eines Rastbolzens eine Spannschraube 29 zur Fixierung in der Leitkurve 15 vorgesehen ist. Die Spannschraube kann als Mutter oder aber auch als Schraube ausgebildet sein. Das entsprechende Widerlager befindet sich auf einem Bolzen oder in einer Gewindebohrung am Rückenlehnenteil 4.

Wie weiterhin aus den Figuren ersichtlich, sind Befestigungspunkte 25, z. B. Druckknöpfe, vorgesehen. Anstelle solcher Druckknöpfe können aber auch Flächenreißverschlusselemente oder auch umlaufende Reißverschlusselemente vorgesehen sein, um daran mittels korrespondierender Befestigungsmittel eine Abdeckung 24 befestigen zu können. Die Abdeckung 24 ist in Figur 3 dargestellt. Die Abdeckung kann ein Kunststoffformteil oder aber auch ein textiles Teil mit verstärkten Rändern sein, die die entsprechenden Befestigungsgegenmittel zur Befestigung an den Befestigungspunkten 25 aufweisen oder durch die hindurch aufsteckbare Befestigungsmittel eindrückbar sind. Die Abdeckung 24 bietet den Vorteil, dass bei Verwendung des Kindersitzes als Liegewageneinsatz zugleich eine vorderseitige Fußabschnittsdichtung gegeben ist. Die Abdeckung 24 kann über die gesamte Beinlänge bis hin zum Körper in etwa in Höhe der Abwicklungsstelle zwischen Rückenlehnenteil und Sitzteil geführt sein. Um das Kind in der Liegeposition weiterhin zu schützen, ist eine Schutzabdeckung 27 integriert, die aus einem flexiblen Textil bestehen kann oder aber auch aus einem verschiebbaren Kunststoffteil, das unter oder in die Abdeckung 24 einschiebbar ist, wenn diese beispielsweise aus Kunststoff besteht.

Die Figuren 2 und 3 zeigen ferner, dass auch eine Kopfschutzhaube 26 vorgesehen sein kann. Diese kann aus einem Formteil bestehen oder aber auch in bekannter Weise eine zusammenfaltbare Haube sein. Die Befestigung ist im Detail nicht angegeben. Die Befestigung kann einerseits an den Seitenwänden 11a und 11b des Rückenlehnenteils erfolgen oder aber auch an diesen und an den Seitenwänden 2a und 2b des U-förmigen Trägers 1. Sie kann sogar an den Schenkeln des Tragebügels 17 und dem Querteil desselben befestigt sein.

Durch die angegebene erfinderische Lehre ist es erstmals möglich, einen Kindersitz so auszugestalten, dass dieser als Kindersicherheitssitz, als Babyträger und als Kinderwagenaufsatz, nämlich Sportwagenaufsatz, und auch als Liegewagenaufsatz verwendet werden kann. Aus Figur 1 ist ferner ersichtlich, dass der Träger zugleich auch als Fußraste dienen kann. Im hochgestellten Zustand des Sitzteiles 3 ist ein ausreichender Abstand zur Vorderkante der Seitenwände 2a und 2b gegeben. Dieser Abstand entspricht mindestens der Fußlänge des darin sitzenden Kleinkindes, so dass auch bei der Verwendung als Reboardsitz die Füße nicht eingeklemmt werden können.

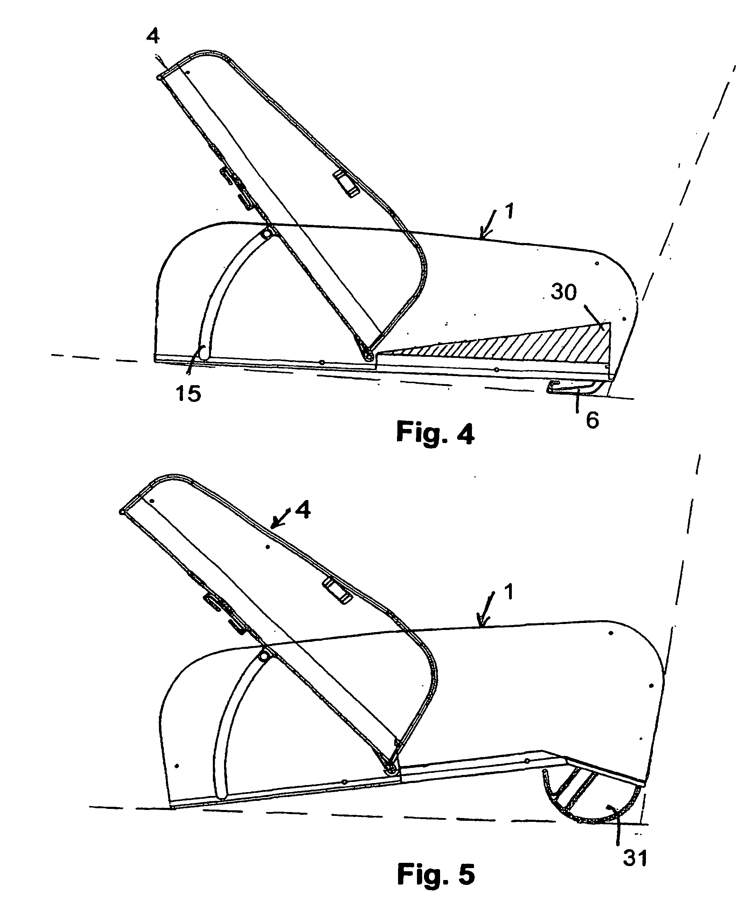

Weitere Beispiele einfacher Ausgestaltungen des Trägers und des Sitzteiles sind in den Figuren 4 bis 6 dargestellt. Figur 4 zeigt eine Ausführungsform, bei der in dem Träger lediglich die Rückenlehne 4 verschwenkbar angeordnet ist. Die Verstellung erfolgt in gleicher Weise wie anhand Figur 1 beschrieben. Zu diesem Zweck ist eine Leitkurve 15 über die gesamte Höhe in die Seitenwände eingebracht. Im vorderen Bereich ist ein Einlegekeil 30 als Sitzpolster eingelegt. Dieser Keil besteht z.B. aus Hartschaumstoff und ist mit einem Textil überspannt. Der Keil kann z.B. mittels Flächenreißverschlusselementen am Boden des Trägers befestigt sein. Die Keilform ist vom Gelenk der Rückenlehne 4 beginnend ansteigend ausgeführt, so dass ein Kind, das darin sitzt, eine Relax-Position einnehmen kann. Selbiges ist auch möglich, wenn der Sitz in umgekehrter Richtung auf einen Fahrzeugsitz aufgesetzt wird. Der Fahrzeugsitz ist in den Figuren 4 und 5 gestrichelt eingezeichnet. Durch den Sitzkeil 30 und die an der Unterseite vorgesehenen Führungsmittel für den Beckengurt des Dreipunktsicherheitsgurtes ist ein Ausgleich der in der Regel schräg nach hinten und unten verlaufenden Sitzfläche des Fahrzeugsitzes gegeben.

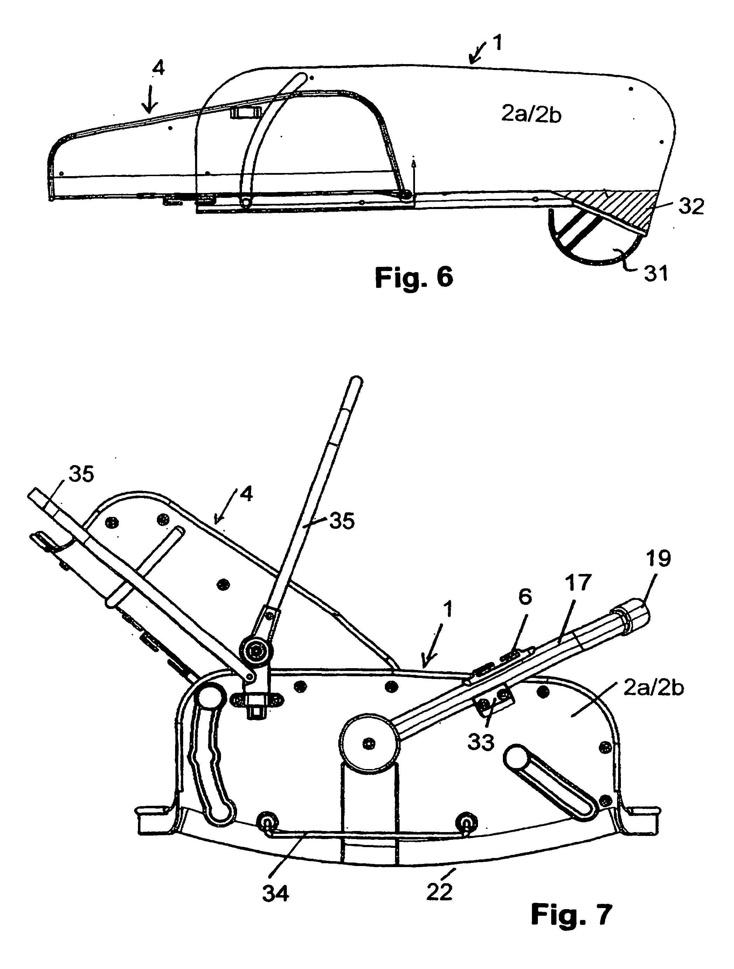

Ein Höhenausgleich kann aber auch durch Anbringung eines Unterbaus 31 am vorderen Ende des Trägers 1 realisiert werden, der in den Figuren 5 und 6 dargestellt ist und z. B. auch hakenförmige Aufnahmen für einen quer einsetzbaren Beckengurt aufweisen kann. Dieser Unterbau sollte insbesondere dann angebracht sein, wenn der Sitz - wie aus Figur 5 ersichtlich - einen Sitzteil aufweist, der bodeneben ausgeführt bzw. leicht erhöht ist, wodurch ein einheitliches Höhenniveau mit der Rückenlehne 4 gegeben ist, wenn die Rückenlehne heruntergeklappt ist. Der Endbereich des Trägers 1 ist im Bodenbereich abgewinkelt gegenüber dem übrigen Bodenbereich, wodurch eine Bein- oder Fußstütze realisiert ist. Soll dieser Bereich für eine Liegeversion mit genutzt werden, so empfiehlt es sich, den aus Figur 6 ersichtlichen Einlegekeil 32 anzubringen, um eine geschlossene durchgehende Fläche zu erhalten.

In Figur 7 ist eine weitere Variante eines erfindungsgemäßen Kindersitzes dargestellt, die sich von den anderen Beispielen, insbesondere von den Figuren 1 und 2, dadurch unterscheidet, dass das Bodenteil 22 seitlich gegenüber den Seitenwänden 2a, 2b verlängert ist. Die überstehenden Enden sind leicht bogenförmig ausgeführt. Ein wesentlicher Unterschied besteht darin, dass an dem Tragebügel 17, und zwar an den beiden Schenkeln, die durch das Querteil 19 miteinander verbunden sind, im Ausführungsbeispiel obenseitig sich Führungsmittel 6 alternativ zu den Führungsmitteln 6 in Figur 1 befinden. Diese sind so angebracht, dass in der dargestellten Schrägstellung die Führungsmittel oberhalb der oberen Kante der Seitenwand für die Einführung des Beckengurtes zugänglich sind. Der Beckengurt wird also hochgelegt. Der Tragebügel 17 greift beim Verschwenken gegen einen Anschlag 33, der an der Seitenwand 2a befestigt ist. Eine gleiche konstruktive Ausführung befindet sich auf der gegenüberliegenden Seite, nämlich an der Seitenwand 2b, diese ist nicht sichtbar. Die Länge des Tragebügels 17 ist so gewählt, dass der Querteil 19 einen bestimmten Bezug zu der äußeren Kante des vorstehenden Teils des Bodenteils 22 aufweist, so dass der Sitz, wenn er auf einen Fahrzeugsitz aufgestellt wird, mit zwei Punkten, nämlich mit der unteren Kante des Bodenteils 22 und mit dem Querteil 19, an der Rückenlehne anliegt, wenn er in dieser Reboardposition mittels des Beckengurtes oder des Beckengurtabschnittes des Fahrzeugsitzes fixiert wird. Die Abbildung zeigt ferner, dass anstelle der in Figur 1 vorgesehenen Arretierungsbolzen 7 und 8 ein Haltebügel 34 vorgesehen ist. Dieser weist vorstehende Endabschnitte auf, so dass auch hierüber eine Befestigung an den Halteholmen eines Kinderwagengestells oder an Fixpunkten in diesem möglich ist. Durch die Verwendung eines Haltebügels 34 ist eine zusätzliche stabilere Ausführung gegeben. Darüber hinaus kann durch Austausch des eingezeichneten Haltebügels 34 durch solche mit abweichend geformten Kröpfungen eine Anpassung an unterschiedliche Haltepunkte in Kinderwagengestellen auf einfache Weise erfolgen. Ferner sind Befestigungsmittel 35 für eine Falthaube bekannter Ausführung vorgesehen.

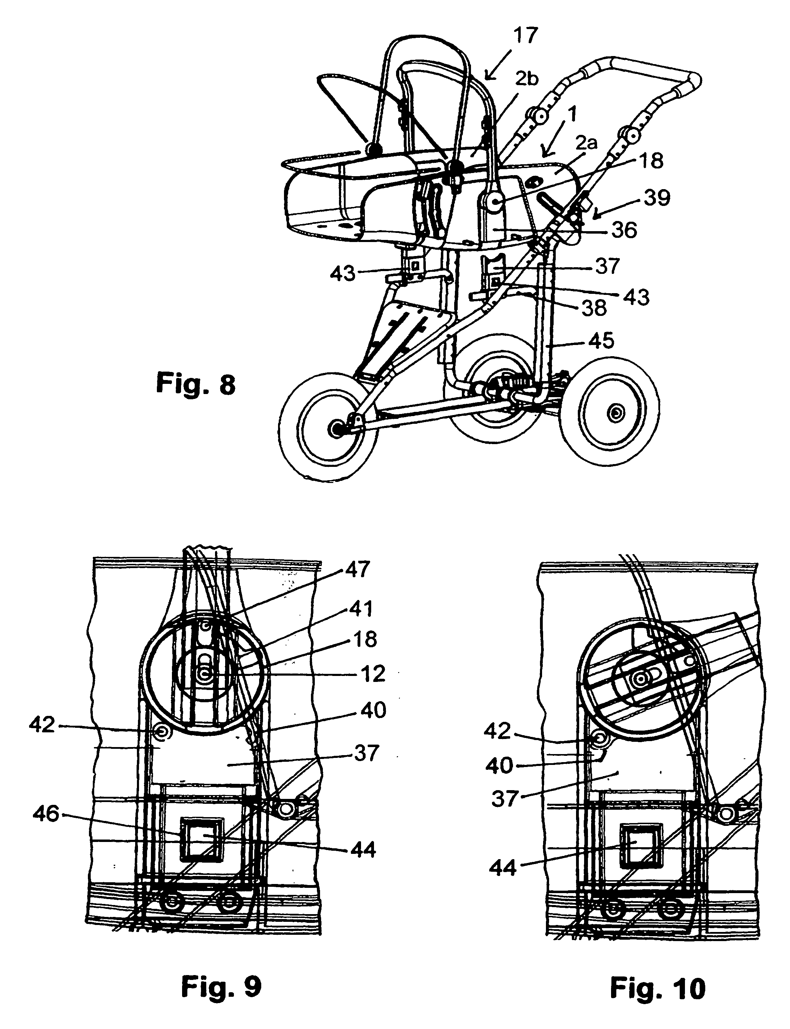

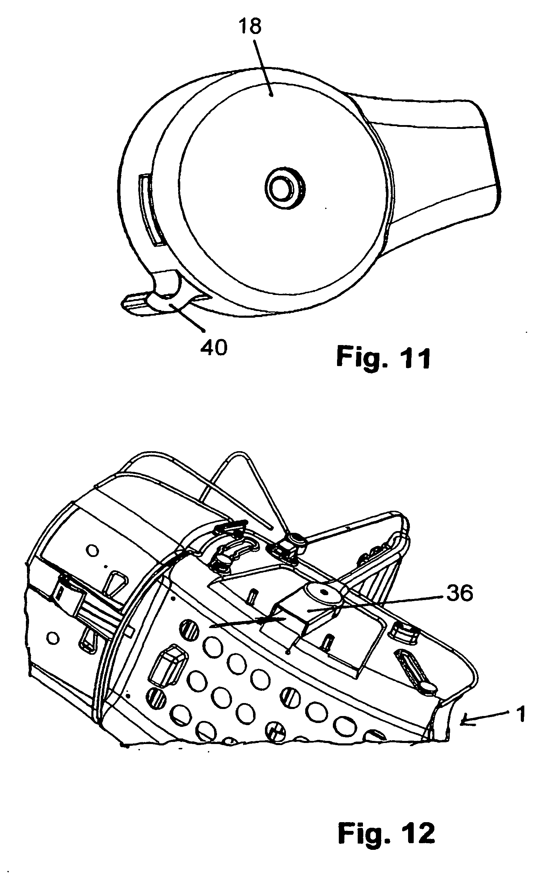

In Fig. 8 ist ein dreirädriger Kinderwagen mit einem Fahrgestell 39 bekannter Art dargestellt. An den hinteren Gestellholmen 45 sind in Form von Profilrohren Trägerelemente 38 befestigt. An diesen Trägerelementen 38 sind Lagerfassungen 43 angenietet. Hierbei handelt es sich um becherförmige, im Querschnitt im Wesentlichen rechteckförmige Lagerfassungen 43 bestimmter Höhe, beispielsweise 4 bis 5 cm. In den Seitenwänden der Lagerfassungen 43 sind, wie die Figuren 9 und 10 dies vereinfacht wiedergeben, quadratische Öffnungen 46 eingebracht, auf deren Bedeutung später noch eingegangen wird. In die Lagerfassungen 43 sind herausnehmbar Halteelemente 37 eingesetzt, deren Länge durch die Bauhöhe der Seitenwände 2a, 2b des U-förmigen Trägers 1 des Kindersitzes bestimmt ist und die Höhe des Lagers des Tragebügels 17, dessen Positionierung bereits anhand der anderen Figuren beschrieben worden ist. Das Halteelement 37 kann als rechteckförmiges Hohlteil ausgebildet sein und weist einen solchen Querschnitt auf, dass es kippsicher in die Lagerfassung 43 einsetzbar ist. Bei hohler Ausführung des Halteelementes können durch Freischnitte Federlaschen 44 (in Fig. 9 und 10 dargestellt) in die Seitenwände eingebracht sein, die unter Rastwirkung mit einem Ansatz in die jeweiligen Öffnungen 46 eingreifen und durch Druck darauf ein Herausziehen des Halteelementes 37 wieder ermöglichen. Im oberen Abschnitt weist das Halteelement 37, wie aus den Figuren 9 und 10 ersichtlich, in der linken Position einen Niet 42 auf, der an den beiden Seitenwänden angenietet ist. Des Weiteren ist obenseitig eine Lagerschale ausgeformt, die dem Radius der Lagerschale 10 des seitlichen Lagers des Tragebügels 17 entspricht. Unterhalb der Lagerschale 18 ist an den Seitenwänden 2a und 2b jeweils ein Führungskanal 36 angebracht. Dieser weist einen Querschnitt auf, der dem Außenquerschnitt des Halteelementes 37 entspricht, so dass auch hierin eine kippsichere Lagerung gegeben ist. Anstelle des Führungskanals 36 kann selbstverständlich auch eine andere Führung, beispielsweise Winkellaschen, vorgesehen sein. Der Führungskanal 36 ist in Fig. 12 deutlicher zu sehen. Fig. 12 zeigt eine Unteransicht des Sitzes, aus der auch zu erkennen ist, dass zur Gewichtsreduzierung in den Boden des U-förmigen Trägers 1 Löcher eingebracht sind. Die eingezeichnete Pfeilrichtung soll verdeutlichen, dass von der Unterseite her die Halteelemente 37 in die Führungskanäle 36 eingesteckt werden müssen, d.h. der Sitz wird auf die Halteelemente 37 mit den Führungskanälen 36 aufgesetzt. Zur Sicherung ist an der Lagerschale 18, wie aus Fig. 11 ersichtlich, ein hakenförmiges Befestigungsmittel 40 vorgesehen. Dieses befindet sich innerhalb des Führungskanals 36, und zwar bei aufgestelltem Tragebügel in einer aus Fig. 9 ersichtlichen rechten Seitenposition. Nach dem beidseitigen Einsetzen der Halteelemente 37 wird der Tragebügel 17 verschwenkt, so dass das hakenförmige Befestigungsmittel 40 den jeweiligen Niet 42 hintergreifen kann. In dieser Schwenkposition ist also der aufgesetzte Kindersitz am Fahrgestell 39 des dreirädrigen Kinderwagens nach Fig. 8 gesichert gehalten.

Zum Lösen ist es lediglich erforderlich, den Tragebügel 17 wieder in die aus Fig. 8 und 9 ersichtliche Tragestellung hoch zu schwenken. Dadurch wird die Sicherung entriegelt und es ist ein Abziehen des Kindersitzes von den Halteelementen 37 möglich. Die Figuren 9 und 10 zeigen ferner, dass in den an den Seitenwänden 2a und 2b vorgesehenen Lagerstellen bzw. in einem Lagerteil Leitkurven 41 eingebracht sind, in denen jeweils ein Zapfen 47 geführt ist. Die Leitkurven weisen an ihren Enden radial nach außen vorstehende Ausnehmungen auf, in die jeweils ein Zapfen 47, der sich an der Innenseite der Lagerschale 18 befindet, einrastet. Um das Ausrasten zu ermöglichen, ist der Tragebügel 17 gegen die Kraft einer nicht dargestellten Feder verschiebbar an der Lagerstelle 12 zusätzlich gelagert und kann um einen definierten geringen Hub bewegt werden. Andere Arretierungsmöglichkeiten sind ebenfalls bekannt, beispielsweise gegen die Kraft einer Feder bewegliche Radialzapfen, die in einen innenliegenden Zahnkranz des Lagers eingreifen.

### Bezugszeichenliste

- 1: U-förmiger Träger
- 2a: Seitenwand
- 2b: Seitenwand
- 3: Sitzteil
- 4: Rückenlehnenteil
- 5: Führungsmittel
- 6: Führungsmittel
- 7: Befestigungseinrichtung
- 8: Befestigungseinrichtung
- 9a: Befestigungseinrichtung
- 9b: Befestigungseinrichtung
- 10: Befestigungseinrichtung
- 11a: Seitenwand (Rückenlehne)
- 11b: Seitenwand (Rückenlehne)
- 12: Lagerstelle
- 13: Rastbolzen
- 14: Durchbrüche
- 15: Leitkurve
- 16: Druckkappen
- 17: Tragebügel
- 18: Lager
- 19: Querteil
- 20: Führungsleitkurve
- 21: Führungsbolzen
- 22: Bodenteil
- 23a: Seitenwände
- 23b: Seitenwände
- 24: Abdeckung
- 25: Befestigungspunkt
- 26: Kopfschutzhaube
- 27: Schutzabdeckung
- 28: Schwenklager
- 29: Spannschraube
- 30: Keil
- 31: Unterbau
- 32: Einlegekeil
- 33: Anschlag
- 34: Haltebügel
- 35: Befestigungsmittel
- 36: Führungskanal
- 37: Halteelemente
- 38: Trägerelement
- 39: Fahrgestell
- 40: Befestigungsmittel
- 41: Leitkurven
- 42: Niet
- 43: Lagerfassung
- 44: Federlasche
- 45: Gestellholm
- 46: Öffnung
- 47: Zapfen

## Patentansprüche

1. Kindersitz mindestens aufweisend:
- einen im Wesentlichen U-förmigen Träger (1), bestehend aus Seitenwänden (2a, 2b), die untenseitig starr miteinander verbunden sind,
- ein Sitzteil (3) und ein Rücklehnenteil (4), die beide zwischen den Seitenwänden (2a, 2b) des U-förmigen Trägers (1) angeordnet sind, von denen mindestens der Rückenlehnenteil im Neigungswinkel verstellbar ist, wobei mindestens die Rückenlehne aus einer unteren im Wesentlichen horizontalen und das Sitzteil (3) verlängernden Lage in eine aufgestellte, mit ihrem oberen Abschnitt die Oberseiten der Seitenwände (2a, 2b) überstehende Position verbringbar ist,
- einen außenseitig an den Seitenwänden (2a, 2b) des U-förmigen Trägers (1) um eine quer zur Längsachse des U-förmigen Trägers (1) verlaufende, im Wesentlichen im Schwerpunkt des Kindersitzes angeordnete Achse verschwenkbar gelagerten und mindestens in der senkrechten Stellung arretierbaren Trägerbügel (17) und
- Befestigungseinrichtungen (7, 8, 9a, 9b, 10) zum Fixieren des U-förmigen Trägers (1) an korrespondierenden Halteeinrichtungen an einem Kinderwagengestell und/oder an Haltern an dem Fahrzeugsitz oder an der Karosserie hinter dem Kraftfahrzeugsitz im Übergangsbereich zwischen Fahrzeugsitz und Rückenlehne des Fahrzeugsitzes.

2. Kindersitz nach Anspruch 1, **dadurch gekennzeichnet, dass** das Sitzteil (3) im Neigungswinkel verstellbar angeordnet und mit dem Rückenlehnenteil (4) bewegungsgekoppelt oder unabhängig verstellbar angeordnet ist.

3. Kindersitz nach Anspruch 1, **dadurch gekennzeichnet, dass** mindestens der Rückenlehnenteil (4) Seitenwände (11a, 11b) aufweist, die sich abschnittsweise parallel an den Innenseiten der Seitenwände (2a, 2b) des U-förmigen Trägers (1) erstrecken und einen seitlichen Aufprallschutz bilden.

4. Kindersitz nach Anspruch 1, 2 oder 3, **dadurch gekennzeichnet, dass** der Rückenlehnenteil (4) mit dem unteren, im U-förmigen Träger (1) liegenden Abschnitt oder die Seitenwände (11a, 11b) des Rückenlehnenteils (4) mit den unteren Abschnitten schwenkbeweglich an Lagerstellen (12) an den Seitenwänden (2a, 2b) des U-förmigen Trägers (1) gelagert ist bzw. sind und dass beabstandet zur Schwenkachse des Rückenlehnenteils (4), querverlaufend zur Rückenlehnenlängsachse, an der Rückseite des Rückenlehnenteils (4) oder in der Rückenlehnenwand oder in den Seitenwänden (11a, 11b) Lager für jeweils einen, gegen die Kraft einer Feder eindrückbaren Rastbolzen (13) vorgesehen sind, die in konturenangepasste Durchbrüche (14), die auf einer Radiusbahn zur Lagerstelle (12) angeordnet sind, beim Verschwenken einrasten und durch Druck mittels Finger auf die Stirnflächen ausrastbar sind, wobei die Anzahl der in Reihe angeordneten Durchbrüche (14) die gewünschten Schrägstellungen definiert und die untersten seitlichen Durchbrüche derart angeordnet sind, dass die Rückenlehne eine horizontale oder nahezu horizontale Ausrichtung aufweist.

5. Kindersitz nach Anspruch 1, 2 oder 3, **dadurch gekennzeichnet, dass** beabstandet zu den Lagerstellen (12) oder der Schwenkachse deckungsgleich verlaufende kreisbogenförmige Leitkurven (15) in die Seitenwände (2a, 2b) des U-förmigen Trägers (1) eingebracht sind, in die jeweils ein an der Rückenlehne (4) axial verschieblich gelagerter oder festmontierter Rastbolzen (13) oder ein Schraubzapfen einer Spannschraube eingreift, der bzw. die in der Leitkurve (15) geführt sind und in unterschiedlichen Verstellpositionen der Rückenlehne (4) durch Feststellmittel oder durch Feststellen fixiert sind.

6. Kindersitz nach Anspruch 4 und 5, **dadurch gekennzeichnet, dass** in der Leitkurve (15) vergrößerte Lagerstellen in Form von Durchbrüchen (14) vorgesehen sind und dass ein erster Rastbolzenabschnitt eines längsverschieblich gelagerten Rastbolzens (13) in der Leitkurve (15) gleitet und ein in Verlängerung vorgesehener zweiter Rastabschnitt des Rastbolzens (13) mit größerem Durchmesser rastend in die Durchbrüche (14) greift.

7. Kindersitz nach Anspruch 4 oder 6, **dadurch gekennzeichnet, dass** der Rastbolzen (13) außenseitig an dem die jeweilige Seitenwand (2a, 2b) des U-förmigen Trägers (1) überstehenden Ende eine Druckkappe aufweist, deren Durchmesser größer als der Durchmesser der Durchbrüche (14) ist.

8. Kindersitz nach Anspruch 1, **dadurch gekennzeichnet, dass** Führungs- (5, 6) und/oder Befestigungsmittel zur Verlaufsfestlegung des Schulter- und/oder Beckengurtes eines Fahrzeugsicherheitsgurtes an mindestens der Rückseite des die Seitenwände (2a, 2b) in einer Gebrauchsposition überstehenden Abschnitts der Rückenlehne (4) und/oder gegenüberliegend vorderseitig an den Seitenwänden (2a, 2b) oben- und/oder untenseitig oder untenseitig an den Verbindungsteilen der Seitenwände des Trägers (1) vorgesehen sind.

9. Kindersitz nach Anspruch 1, **dadurch gekennzeichnet, dass** der Tragebügel (17) so lang ausgebildet oder teleskopartig verlängerbar ausgeführt ist, dass er bei der Verwendung des Kindersitzes als Reboardsitz auf einem Kraftfahrzeugsitz über dem vorderen Teil des U-förmigen Trägers (1) mit dem Sitzteil (3) verschwenkbar ist und sich an der Rückenlehne des Fahrzeugsitzes abstützt und in der Schwenkstellung arretiert ist oder mit mindestens einem Schenkel an einem Anschlag (33) an der Seitenwand (2a, 2b) anliegt oder lösbar daran befestigt ist oder in einer verkürzten Stellung oder Ausführung als Schutzbügel sich über die Oberbeine eines in dem Kindersitz sitzenden Kindes erstreckt.

10. Kindersitz nach Anspruch 8 oder 9, **dadurch gekennzeichnet, dass** an mindestens einem der Schenkel des Tragebügels (17) mindestens ein Führungs- (6) und/oder Befestigungsmittel für den Beckengurt oder den Beckengurtabschnitt des Fahrzeugsicherheitsgurtsystems vorgesehen ist.

11. Kindersitz nach Anspruch 1, 9 oder 10, **dadurch gekennzeichnet, dass** die Vorderseite des Trägers (1) oder die Stirnseiten der Seitenwände (2a, 2b) oder des vorderen Verbindungsteils bzw. Bodenteils (22) an der Rückenlehne des Fahrzeugsitzes anliegen.

12. Kindersitz nach einem der Ansprüche 1, 8 bis 11, **dadurch gekennzeichnet, dass** das Bodenteil (22) mindestens vorderseitig die Seitenwände (2a, 2b) übersteht und geradlinig oder gebogen ausgeführt ist.

13. Kindersitz nach Anspruch 1, **dadurch gekennzeichnet, dass** an dem Träger (1) Konnektoren zur Fixierung des Trägers (1) an Haltern eines ISOFIX-Befestigungssystems am Fahrzeugsitz vorgesehen sind, welche Konnektoren vorzugsweise an der Unterseite des Trägers längsverschieblich vorgesehen sind und an ihren Enden Schlosssysteme zum Aufrasten auf Querbolzen der Halter aufweisen, oder dass an den Seitenwänden (2a, 2b) des Trägers (1) unter den Lagerschalen (18) des an den Lagerstellen (12) an den Seitenwänden (2a, 2b) schwenkbar gelagerten Tragebügels (17) Führungen oder Führungskanäle (36) zur Aufnahme von nach oben stehenden Halteelementen (37) an Trägerelementen (38) in einem Fahrgestell (39) eines vier- oder dreirädrigen Kinder- oder Puppenwagens oder an Halteelementen an einem auf einem Fahrzeugsitz aufstellbaren Adapter mit Konnektoren zur Fixierung an Haltern des ISOFIX-Befestigungssystems am Fahrzeugsitz vorgesehen sind und dass an mindestens einer Lagerschale (18) Befestigungsmittel (40) vorgesehen sind, die beim Verbringen des Tragebügels (17) aus einer Trageposition in eine Schwenkstellung mit korrespondierenden Befestigungsmitteln an dem zugeordneten Halteelement (37) derart zusammenwirken, dass der Träger (1) an dem Halteelement (37) gegen Abzug gesichert gehalten und nur durch Zurückschwenken des Tragebügels (17) in die Trageposition von den Halteelementen (37) abhebbar ist.

14. Kindersitz nach Anspruch 1, **dadurch gekennzeichnet, dass** der Sitzteil (3) mit seinem hinteren Ende schwenkbeweglich an den Seitenwänden (2a, 2b) des U-förmigen Trägers befestigt und vorderseitig durch Neigungswinkelverstelleinrichtung in verschiedene Positionen verschwenkbar ist oder aus einem befestigten Einlegeteil besteht.

15. Kindersitz nach einem der Ansprüche 1 bis 7 **dadurch gekennzeichnet, dass** der Sitzteil (3) schwenkbeweglich an dem unteren Ende der Rückenlehne (4) mit seinem hinteren Ende angelenkt ist.

16. Kindersitz nach den Ansprüchen 1 bis 7, 14 oder 15, **dadurch gekennzeichnet, dass** der Sitzteil (3) vorderseitig mit seitlichen Führungsbolzen (21) in Führungsleitkurven (20) bzw. Kulissen in den Seitenwänden (2a, 2b) des U-förmigen Trägers (1) geführt und darin in verschiedenen Positionen fixiert oder fixierbar ist.

17. Kindersitz nach Anspruch 14 oder 15, **dadurch gekennzeichnet, dass** an der Unterseite des Sitzteiles (3) eine Aufstellstütze im vorderen Bereich vorgesehen ist, die schwenkbar angelenkt oder feststellbar vorgesehen ist und mit der Unterseite auf ein Querverbindungsteil im unteren Randbereich der Seitenteile (2a, 2b) des U-förmigen Trägers (1) aufgreift und in mindestens eine höchste und eine niedrigste Aufstellposition verbringbar ist, in welcher letzteren die Sitzfläche des Sitzteiles (3) eine im Wesentlichen horizontale Position einnimmt, oder dass eine Anordnung einer Aufstellstütze am Querverbindungsteil vorgesehen ist, die in kinematischer Umkehr wirkend ausgebildet und schwenk- oder feststellbar an dem Sitzteil vorgesehen ist.

18. Kindersitz nach Anspruch 17, **dadurch gekennzeichnet, dass** die Aufstellstütze mittels eines verstellbaren Rastgelenkes an dem Sitzteil (3) befestigt ist oder die Unterseite der Aufstellstütze in konturenangepasste Rastausnehmungen an dem Querverbindungsteil zwischen den beiden Seitenwänden (2a, 2b) des U-förmigen Trägers (1) wieder lösbar einrastbar ist.

19. Kindersitz nach einem der vorhergehenden Ansprüche, **dadurch gekennzeichnet, dass** der Verbindungsteil zwischen den Seitenwänden (2a, 2b) des U-förmigen Trägers (1) ein im Wesentlichen durchgehender Bodenteil (22) ist.

20. Kindersitz nach Anspruch 1, 8 oder 19, **dadurch gekennzeichnet, dass** unterhalb des Bodenteils (22) und beabstandet hierzu eine die Seitenwände (2a, 2b) des U-förmigen Trägers (1) verbindende Bodenplatte zusätzlich vorgesehen ist und dass der Zwischenraum als Staufach ausgebildet ist und die vorderseitigen und/oder rückseitigen am Träger so gebildeten Einlegeöffnungen wahlweise mittels einer Klappe verschließbar sind und dass die Führungsmittel für die Gurte an der Unterseite der Bodenplatte vorgesehen sind.

21. Kindersitz nach Anspruch 1 oder 12, **dadurch gekennzeichnet, dass** mindestens die Seitenwände (2a, 2b) des U-förmigen Trägers (1) den Sitzteil (3) mindestens in einer angehobenen Position vorderseitig um die Fußhöhe eines Kleinkindes überstehen und dass der Überstandsabschnitt des Bodenteils (22) oder des Verbindungsteils zwischen den Seitenwänden (2a, 2b) als Fußstütze für das Kleinkind ausgebildet ist.

22. Kindersitz nach Anspruch 1, **dadurch gekennzeichnet, dass** der U-förmige Träger (1) einteilig als Formteil aus Kunststoff hergestellt ist.

23. Kindersitz nach Anspruch 1, **dadurch gekennzeichnet, dass** das Rückenlehnenteil (3) ein Kunststoffformteil, insbesondere ein Hartkunststoffteil, ein geschäumtes oder geblasenes Kunststoffteil ist.

24. Kindersitz nach Anspruch 1, **dadurch gekennzeichnet, dass** der Sitzteil (3) mit oder ohne Seitenwände (23a, 23b) ein einteiliges Kunststoffformteil, insbesondere ein Hartkunststoffteil, ein geschäumtes oder geblasenes Kunststoffteil ist.

25. Kindersitz nach Anspruch 1 oder einem der Ansprüche 26 bis 28, **dadurch gekennzeichnet, dass** die Innenflächen der Rückenlehne (4) und/oder des Sitzteiles (3) gepolstert sind oder geschäumte Kunststoffeinlegeteile aufweisen.

26. Kindersitz nach Anspruch 1, **dadurch gekennzeichnet, dass** in dem Rückenlehnenteil (4) spiegelbildlich zwei Reihen von Querdurchbrüchen für die verstellbare Lagerung eines Hosenträgergurtes und an dem Sitzteil mittig eine Reihe von Löchern und/oder eine Befestigungseinrichtung für einen Schrittgurt vorgesehen sind, wobei beide Gurtsysteme in bekannter Weise miteinander verbunden oder zur Sicherung des Kleinkindes in dem Sitz verbindbar sind.

27. Kindersitz nach Anspruch 1, **dadurch gekennzeichnet, dass** als Befestigungseinrichtung (7, 8) vorstehende Arretierungsbolzen oder ein vorstehender, vorzugsweise nach unten abgewinkelter Haltebügel (34) vorgesehen sind, die durch längere und/oder durch solche mit längeren Lagerzapfen austauschbar sind, die mit gekröpften Ausbildungsabschnitten in Aufnahmen in Haltern in einem Kinderwagengestell einhängbar und darin gesichert gelagert oder in Führungsaufnahmen an Trägern einsetzbar und darin gesichert gehalten sind, welche Träger im Wagengestell befestigt sind.

28. Kindersitz nach Anspruch 1, **dadurch gekennzeichnet, dass** als Befestigungseinrichtung (9a, 9b, 10) an der Unterseite des Bodenteils (22) Aufsteckklemmvorrichtungen (11) vorgesehen sind, die auf Querstangen im Wagengestell aufschiebbar bzw. aufklippbar oder befestigbar sind.

29. Kindersitz nach Anspruch 1 oder 13, **dadurch gekennzeichnet, dass** Höhenlagen der stirnseitig vorgesehenen Bodenverbindungsteile oder der Abstände zwischen den Seitenwänden (2a, 2b) des U-förmigen Trägers (1) so gelegt sind, dass bei heruntergeklapptem Rückenlehnenteil (4) und Sitzteil (3) eine durchgehende, ebene Liegefläche gegeben ist.

30. Kindersitz nach Anspruch 8, **dadurch gekennzeichnet, dass** die Führungsmittel (5) für den querverlaufenden Schultergurt des Fahrzeugsicherheitsgurtes an der Rückseite des Rückenlehnenteils (4) so positioniert sind, dass diese im abgeklappten Zustand des Rückenlehnenteils (4) zwischen den Seitenwänden (2a, 2b) des U-förmigen Trägers (1) nicht zugänglich sind.

31. Kindersitz nach Anspruch 16, **dadurch gekennzeichnet, dass** die Führungsleitkurven (20) bzw. Kulissen im Wesentlichen schrägverlaufend, und zwar von vorne nach hinten aufsteigend, in den Seitenwänden (2a, 2b) angeordnet sind.

32. Kindersitz nach Anspruch 1, **dadurch gekennzeichnet, dass** an den Seitenwänden (2a, 2b) des U-förmigen Trägers (1) mindestens im Bereich des Sitzteiles Befestigungspunkte (25) oder Halter zur Befestigung von Ansteckteilen und/oder zur Fixierung einer Abdeckung (24) und/oder einer Schutzhaube außenseitig vorgesehen sind, an denen die Abdeckung oder Schutzhaube aus textilem oder Kunststoffmaterial befestigbar ist, welche Abdeckung (24) oder Kunststoffhaube mindestens den Fuß- und einen Teilbereich der Beine des Kleinkindes schützend übergreift.

33. Kindersitz nach Anspruch 1, 8 und 10, **dadurch gekennzeichnet, dass** an den Seitenwänden (2a, 2b) im hinteren Bereich und/oder an dem Rückenlehnenteil (4) und/oder an den Seitenwänden (11a, 11b) des Rückenlehnenteils (4) mindestens Befestigungspunkte und Mittel zur Fixierung einer Kopfschutzhaube (26) vorgesehen sind.

34. Kindersitz nach Anspruch 1 oder 33, **dadurch gekennzeichnet, dass** im Randbereich des überstehenden Kopfteiles der Rückenlehne (4) Befestigungsmittel (35) zur Befestigung eines Querwandteiles oder für die Kopfschutzhaube (26) vorgesehen sind.

35. Kindersitz nach Anspruch 33, **dadurch gekennzeichnet, dass** die Haube eine Falthaube ist oder eine einteilige Haube aus Kunststoff und als Formteil hergestellt ist.

36. Kindersitz nach Anspruch 1 oder 8, **dadurch gekennzeichnet, dass** er an der Unterseite des Bodenteils (22) und/oder mindestens an einer der Seitenwände (2a, 2b) des Trägers (1) obenseitig in Längsrichtung versetzt angeordnete Führungen oder Befestigungsmittel für die Aufnahme eines Beckengurtes eines Fahrzeugsicherheitsgurtes aufweist und dass hierüber der Kindersitz als in Längsrichtung auf den Fahrzeugsitz aufgestelltes Kinderbett befestigbar ist.

37. Kindersitz nach Anspruch 1, **dadurch gekennzeichnet, dass** der Sitzteil (3) als Bodenteil des Trägers (1) ausgeformt ist und aus einem Sitzabschnitt und einem die Oberschenkel des Kindes unterstützenden, vorderseitig abfallenden Bein/Fußabschnitt besteht.

38. Kindersitz nach Anspruch 1, 35 oder 36, **dadurch gekennzeichnet, dass** der Träger (1) am Sitzende einen den Bodenwinkel veränderbaren Unterbau (31) oder eine ausklappbare Stütze aufweist, die das Ende gegenüber dem hinteren Auflagepunkt anhebt.

39. Kindersitz nach Anspruch 1, 2 oder 3, **dadurch gekennzeichnet, dass** der Rückenlehnenteil (4) im Neigungswinkel mittels verstellbarer und vorzugsweise arretierbarer Stützelemente zwischen Rückenlehnenteil (4) und Bodenteil (22) einstellbar ist und dass die Stützelemente am Bodenteil (22), am Querverbindungsteil oder am Rückenlehnenteil (4), insbesondere an der Unterseite, verankert und/oder schwenkbar befestigt und an Lagerstellen an dem korrespondierenden Teil befestigbar sind.

40. Kindersitz nach Anspruch 13, **dadurch gekennzeichnet, dass** als Befestigungsmittel (40) ein Haken an der Mantelwand der Lagerschale (18) vorgesehen ist, der einen am Halteelement (37) vorgesehenen Bolzen oder Niet (42) in der Sicherungsschwenkstellung hintergreift, oder dass das Halteelement (37) obenseitig eine dem Durchmesser der Lagerschale (18) angepasste Lagerungsausnehmung mit einer obenseitigen geringeren Öffnungsweite als der Durchmesser der Lagerschale aufweist und dass die Lagerschale (18) spiegelbildlich zur Längsachse der Schenkel des Tragebügels (17) seitliche Abflachungen aufweist, die eine Führung mit parallelen Flächen bilden, deren Abstand der obenseitigen Öffnungsweite der Lagerausnehmungen entspricht, und dass nach dem Einsetzen der Lagerschale (18) in der Trageposition des Tragebügels (17) durch Verschwenken des Tragebügels (17) der längere Teil der Führung, die dem Durchmesser entspricht, durch Formschluss den Kindersitz sichert.

41. Kindersitz nach einem der vorhergehenden Ansprüche, **dadurch gekennzeichnet, dass** er als Puppensitz im entsprechenden Maßstab ausgebildet ist.

## Claims

1. Child seat at least comprising:
- a substantially U-shaped carrier (1) consisting of side walls (2a, 2b) which are rigidly connected together at the lower side,
- a seat part (3) and a backrest part (4), which are both arranged between the side walls (2a, 2b) of the U-shaped carrier (1) and of which at least the backrest part is adjustable in angle of inclination, wherein at least the backrest can be brought from a lower, substantially horizontal position prolonging the seat part (3) into an upright position protruding by an upper section thereof above the upper sides of the side walls (2, 2b),
- a carrier bracket (17) which is mounted at the outer side on the side walls (2a, 2b) of the U-shaped carrier (1) to be pivotable about an axis extending transversely to the longitudinal axis of the U-shaped carrier (1) and arranged substantially at the centre of gravity of the child seat and which is lockable at least in the upright setting and
- fastening devices (7, 8, 9a, 9b, 10) for fixing the U-shaped carrier (1) at corresponding mounting devices at a child carriage frame and/or at mounts at the vehicle seat or at the bodywork behind the motor vehicle seat in the transition region between the vehicle seat and backrest of the vehicle seat.

2. Child seat according to claim 1, **characterised in that** the seat part (3) is arranged to be adjustable in angle of inclination and is coupled with the backrest part (4) in terms of movement or arranged to be independently adjustable.

3. Child seat according to claim 1, **characterised in that** at least the backrest part (4) comprises side walls (11a, 11b) which extend in sections parallel to the inner sides of the side walls (2a, 2b) of the U-shaped carrier (1) and form a lateral impact protection.

4. Child seat according to claim 1, 2 or 3, **characterised in that** the backrest part (4) together with the lower section lying in the U-shaped carrier (1) or the side walls (11a, 11b) of the backrest part (4) together with the lower sections is or are mounted at bearing points (12) at the side walls (2a, 2b) of the U-shaped carrier (1) to be pivotably movable and that bearings each for a respective detent pin (13) able to be pressed in against the force of a spring are provided, at a spacing from the pivot axis of the backrest part (4) and transversely extending relative to the backrest longitudinal axis, at the rear side of the backrest part (4) or in the backrest wall or in the side walls (11a, 11b), which pins on pivotation detent in passages (14) matched to the profile and arranged on a radial path with respect to the bearing point (12) and which pins can be released from detenting by finger pressure on the end surfaces, wherein the number of passages (14) arranged in a row defines the desired inclined settings and the lowermost lateral passages are arranged in such a manner that the backrest has a horizontal or almost horizontal orientation.

5. Child seat according to claim 1, 2 or 3, **characterised in that** coincidentally extending, circularly arcuate guide cams (15), in each of which a respective detent pin (13) mounted at the backrest (4) to be axially displaceable or fixably mounted or a screw pin of a clamping screw engages, are formed in the side walls (2a, 2b) of the U-shaped carrier (1) at a spacing from the bearing points (12) or the pivot axis, which detent pins or screw pins are guided in the guide cam (15) and are fixed in different positions of adjustment of the backrest (4) by securing means or by fixing.

6. Child seat according to claim 4 and 5, **characterised in that** enlarged bearing points in the form of passages (14) are provided in the guide cam (15) and that a first detent pin section of a detent pin (13) mounted to be longitudinally displaceable slides in the guide cam (15) and a second detent section of the detent pin (13) with greater diameter and provided in prolongation engages in detenting manner in the passages (14).

7. Child seat according to claim 4 or 6, **characterised in that** the detent pin (13) has at the outer side at the end projecting beyond the respective side wall (2a, 2b) of the U-shaped carrier (1) a pressure cap having a diameter greater than the diameter of the passages (14).

8. Child seat according to claim 1, **characterised in that** guide means (5, 6) and/or fastening means for fixing of the path of the shoulder and/or pelvic strap of a vehicle safety belt are provided at at least the rear side of the section, which protrudes beyond the side walls (2a, 2b) in a use position, of the backrest (4) and/or oppositely at the front side at the side walls (2a, 2b) at the top side and/or bottom side or at the bottom side at the connecting parts of the side walls of the carrier (1).

9. Child seat according to claim 1, **characterised in that** the carrier bracket (17) is constructed to be of such length or so formed to be telescopically extensible that in the case of use of the child seat as a reboard seat on a motor vehicle seat it is pivotable over the front part of the U-shaped carrier (1) by the seat part (3) and is supported at the backrest of the vehicle seat and locked in the pivot setting or bears by at least one limb against an abutment (33) at the side wall (2a, 2b) or is detachably fastened thereto or in a shortened setting or embodiment as a protective yoke extends over the upper legs of a child sitting in the child seat.

10. Child seat according to claim 8 or 9, **characterised in that** at least one guide means (6) and/or fastening means for the pelvic strap or the pelvic strap section of the vehicle safety belt system is provided at at least one of the limbs of the carrier bracket (17).

11. Child seat according to claim 1, 9 or 10, **characterised in that** the front side of the carrier (1) or the end faces of the side walls (2a, 2b) or the front connecting part or base part (22) bears or bear against the backrest of the vehicle seat.

12. Child seat according to one of claims 1, 8 to 11, **characterised in that** the base part (22) protrudes at least at the front side beyond the side walls (2a, 2b) and is constructed to be straight or curved.

13. Child seat according to claim 1, **characterised in that** connectors for fixing the carrier (1) to mounts of an ISOFIX fastening system at the vehicle seat are provided at the carrier (1), which connectors are preferably provided at the underside of the carrier to be longitudinally displaceable and have at the ends thereof lock systems for detenting onto transverse pins of the mounts, or that guides or guide channels (36) for reception of upwardly extending mounting elements (37) at carrier elements (38) in a chassis (39) of a four-wheel or three-wheel child carriage or doll carriage or at mounting elements at an adapter, which can be placed on a vehicle seat, with connectors for fixing to mounts of the ISOFIX fastening system at the vehicle seat are provided at the side walls (2a, 2b) of the carrier (1) under the bearing shells (18) of the carrier bracket (17) pivotably mounted at the bearing points (12) at the side walls (2a, 2b) and that fastening means (40) are provided at at least one bearing shell and on bringing the carrier bracket (17) from a carry position to a pivot setting co-operate with corresponding fastening means at the associated mounting element (37) in such a manner that the carrier (1) is mounted at the mounting element (37) to be secured against withdrawal and can be lifted off the mounting elements (37) only by pivoting back the carrier bracket (17) into the carry position.

14. Child seat according to claim 1, **characterised in that** the seat part (3) is fastened by its rear end to be pivotably movable at the side walls (2a, 2b) of the U-shaped carrier and is pivotable at the front side into different positions by an inclination angle adjusting device or consists of a fastened insert part.

15. Child seat according to one of claims 1 to 7, **characterised in that** the seat part (3) is articulated by its rear end to the lower end of the backrest (4) to be pivotably movable.

16. Child seat according to claims 1 to 7, 14 or 15, **characterised in that** the seat part (3) is guided at the front side by lateral guide pins (21) in guide cams (20) or guide gates in the side walls (2a, 2b) of the U-shaped carrier (1) and is fixed or fixable therein in different positions.

17. Child seat according to claim 14 or 15, **characterised in that** provided at the underside of the seat part (3) and in the front region is a set-up support which is pivotably articulated or provided to be fixable and engages by the underside on a cross-connecting member in the lower edge region of the side parts (2a, 2b) of the U-shaped carrier (1) and which can be brought into at least one highest and one lowest set-up position, in which latter position the seat surface of the seat part (3) adopts a substantially horizontal position, or that an arrangement of a set-up support is provided at the cross connecting part and is constructed to act in kinematic inversion and is provided to be pivotable or fixable at the seat part.

18. Child seat according to claim 17, **characterised in that** the set-up support is fastened by means of an adjustable detent joint to the seat part (3), or the underside of the set-up support is detentable, so as to be detachable again, in profile-matched detent recesses at the cross connecting part between the two side walls (2a, 2b) of the U-shaped carrier (1).

19. Child seat according to one of the preceding claims, **characterised in that** the connecting part between the side walls (2a, 2b) of the U-shaped carrier (1) is a substantially continuous base part (22).

20. Child seat according to claim 1, 8 or 19, **characterised in that** a base plate connecting the side walls (2a, 2b) of the U-shaped carrier (1) is additionally provided below the base part (22) and at a spacing therefrom and that the intermediate space is constructed as a stowage compartment and the insert openings thus formed at the front side and/or rear side at the carrier are selectably closable by means of a flap and that the guide means for the straps are provided at the underside of the base plate.

21. Child seat according to claim 1 or 12, **characterised in that** at least the side walls (2a, 2b) of the U-shaped carrier (1) project beyond the seat part (3) at least in a raised position at the front side by the height of the foot of a small child and that the projecting section of the base part (22) or of the connecting part between the side walls (2a, 2b) is constructed as a footrest for the small child.

22. Child seat according to claim 1, **characterised in that** the U-shaped carrier (1) is produced integrally as a moulded part of plastics material.

23. Child seat according to claim 1, **characterised in that** the backrest part (3) is a plastics material moulded part, particularly a hard plastics material part, a foamed plastics material part or a blow-moulded plastics material part.

24. Child seat according to claim 1, **characterised in that** the seat part (3) with or without side walls (23a, 23b) is an integral plastics material moulded part, particularly a hard plastics material part, a foamed plastics material part or a blow-moulded plastics material part.

25. Child seat according to claim 1 or one of claims 26 to 28, **characterised in that** the inner surfaces of the backrest (4) and/or of the seat part (3) are upholstered or have foamed plastics material insert parts.

26. Child seat according to claim 1, **characterised in that** two rows of transverse passages for the adjustable mounting of a harness strap are provided in mirror image in the backrest part (4) and a row of holes and/or a fastening device for a crotch strap are centrally provided at the seat part, wherein the two strap systems are connected together in known manner or are connectible for securing the small child in the seat.

27. Child seat according to claim 1, **characterised in that** projecting locking pins or a projecting, preferably downwardly angled, retaining bracket (34) is or are provided as fastening device (7, 8), these being exchangeable by longer ones and/or by such with longer bearing pins, which can be suspended by cranked constructional portions in receptacles in mounts in a child carriage frame and mounted therein to be secure or insertable into guide receptacles at carriers and mounted therein to be secure, which carriers are fastened in the carriage frame.

28. Child seat according to claim 1, **characterised in that** plug-on clamping devices (11), which can be placed or clipped onto or fastened to transverse rods in the carriage frame, are provided as fastening device (9a, 9b, 10) at the underside of the base part (22).

29. Child seat according to claim 1 or 13, **characterised in that** height positions of the base connecting parts provided at the front end or the spacings between the side walls (2a, 2b) of the U-shaped carrier (1) are so positioned that when the backrest part (4) and seat part (3) are folded down a continuous, flat rest surface is given.

30. Child seat according to claim 8, **characterised in that** the guide means (4) for the transversely extending shoulder strap of the vehicle safety belt are so positioned at the rear side of the backrest part (4) that in the folded down state of the backrest part (4) between the side walls (2a, 2b) of the U-shaped carrier (1) these are not accessible.

31. Child seat according to claim 16, **characterised in that** the guide cams (20) or gate guides are arranged in the side walls (2a, 2b) to be substantially obliquely extending and, in particular, rising from the front to the back.

32. Child seat according to claim 1, **characterised in that** fastening points (25) or mounts for the fastening of plug parts and/or for fixing a cover (24) and/or a protective hood are provided externally at the side walls (2a, 2b) of the U-shaped carrier (1) at least in the region of the seat part and the cover or protective hood of textile or plastics material is fastenable to the fastening points, the cover (24) or plastics material hood protectively engaging over at least the foot region and a part region of the legs of the small child.

33. Child seat according to claim 1, 8 and 10, **characterised in that** at least fastening points and means for fixing a head protective hood (26) are provided at the side walls (2a, 2b) in the rear region and/or at the backrest part (4) and/or at the side walls (11a, 11b) of the backrest part (4).

34. Child seat according to claim 1 or 33, **characterised in that** fastening means (35) for fastening a transverse wall part or for the head protection hood (26) are provided in the edge region of the projecting head part of the backrest (4).

35. Child seat according to claim 33, **characterised in that** the hood is a folding hood or a unitary hood of plastics material and produced as a moulded part.

36. Child seat according to claim 1 or 8, **characterised in that** it has guides or fastening means, which are arranged at the underside of the base part (22) and/or at least at one of the side walls (2a, 2b) of the carrier (1) at the upper side to be offset in longitudinal direction, for reception of a pelvic strap of a vehicle safety belt and that by way of this the child seat is fastenable as a child bed able to be placed in longitudinal direction on the vehicle seat.

37. Child seat according to claim 1, **characterised in that** the seat part (3) is formed as a base part of the carrier (1) and consists of a seat section and a leg/foot section supporting the upper limb of the child and dropping away at the front side.

38. Child seat according to claim 1, 35 or 36, **characterised in that** the carrier (1) has at the seat end a substructure (31) able to change the base angle or a support which can be folded out and which raises the end relative to the rearward support point.

39. Child seat according to claim 1, 2 or 3, **characterised in that** the backrest part (4) is settable in angle of inclination by means of adjustable and preferably lockable support elements between backrest part (4) and base part (22) and that the support elements are anchored and/or pivotably fastened to the base part (22), to the cross connecting part or to the backrest part (4), particularly at the underside, and are fastenable at bearing points to the corresponding part.

40. Child seat according to claim 13, **characterised in that** a hook is provided as fastening means (40) at the circumferential wall of the bearing shell (18) and engages behind a pin or rivet (42), which is provided at the mounting element (37), in the securing pivot setting or that the mounting element (37) has at the upper side a mounting recess, which is matched to the diameter of the bearing shell (18), with a smaller opening width at the top side than the diameter of the bearing shell and that the bearing shell (18) has in mirror image to the longitudinal axis of the limbs of the carrier bracket (17) lateral flats which form a guide with parallel surfaces, the spacing of which corresponds with the opening width of the bearing recesses at the top side, and that after insertion of the bearing shell (18) in the carry position of the carrier bracket (17) by pivotation of the carrier bracket (17) the longer part of the guide, which corresponds with the diameter, secures the child seat by mechanically positive lock.

41. Child seat according to one of the preceding claims, **characterised in that** it is constructed as a doll seat in appropriate scale.

## Revendications

1. Siège pour bébés, comprenant au moins :
- un support (1) essentiellement en forme de U, constitué de parois latérales (2a, 2b) qui sont rigidement reliées l'une à l'autre par le côté inférieur,
- une partie formant assise (3) et une partie formant dossier (4), qui sont agencées toutes les deux entre les parois latérales (2a, 2b) du support en forme de U (1), parmi lesquelles la partie formant dossier au moins est réglable quant à son angle d'inclinaison, et le dossier au moins peut être amené, à partir d'une disposition inférieure essentiellement horizontale en prolongement de la partie formant assise (3), dans une position dressée dans laquelle son tronçon supérieur dépasse au-dessus des côtés supérieurs des parois latérales (2a, 2b),
- un arceau de transport (17), monté du côté extérieur sur les parois latérales (2a, 2b) du support en forme de U (1) en pivotement autour d'un axe s'étendant perpendiculairement à l'axe longitudinal du support en forme de U (1) et passant sensiblement par le centre de gravité du siège pour bébés, et susceptible d'être arrêté au moins dans l'orientation verticale, et
- des moyens de fixation (7, 8, 9a, 9b, 10) pour fixer le support en forme de U (1) sur des moyens de maintien correspondants sur un châssis de poussette pour bébés et/ou sur des organes de maintien sur le siège ou sur la carrosserie d'un véhicule derrière le siège du véhicule, dans la zone de transition entre le siège et le dossier du siège de véhicule.

2. Siège pour bébés selon la revendication 1, **caractérisé en ce que** la partie formant assise (3) est agencée de façon réglable quant à son angle d'inclinaison, et est agencée soit de façon couplée en mouvement avec la partie formant dossier (4), soit de façon indépendamment réglable.

3. Siège pour bébés selon la revendication 1, **caractérisé en ce que** la partie formant dossier (4) au moins comprend des parois latérales (11a, 11b) qui s'étendent par tronçons parallèlement aux côtés intérieurs des parois latérales (2a, 2b) du support en forme de U (1) et forment une protection anti-collision latérale.

4. Siège pour bébés selon l'une des revendications 1, 2 et 3, **caractérisé en ce que** la partie formant dossier (4), par son tronçon inférieur situé dans le support en forme de U (1), ou les parois latérales (11a, 11b) de la partie formant dossier (4), par leur tronçons inférieurs, est/sont montée(s) mobile(s) en pivotement sur des emplacements de palier (12) sur les parois latérales (2a, 2b) du support en forme de U (1), et **en ce qu'**il est prévu, à distance de l'axe de pivotement de la partie formant dossier (4), des paliers s'étendant transversalement à l'axe longitudinal du dossier, sur la face arrière de la partie formant dossier (4) ou dans la paroi du dossier ou encore dans les parois latérales (11a, 11b), pour des goujons à enclenchement respectifs (13) susceptibles d'être enfoncés à l'encontre de la force d'un ressort, lesquels s'enclenchent lors du pivotement dans des traversées à contour adapté (14) qui sont agencées sur une trajectoire définie par un rayon par rapport à l'emplacement de palier (12), et sont susceptibles d'être désenclenchés en exerçant une pression au moyen d'un doigt sur les faces frontales, le nombre des traversées (14) agencées sur une rangée définissant les orientations inclinées souhaitées, et les traversées latérales les plus inférieures étant ainsi agencées que le dossier présente une orientation horizontale ou pratiquement horizontale.

5. Siège pour bébés selon l'une des revendications 1, 2 et 3, **caractérisé en ce que**, dans les parois latérales (2a, 2b) du support en forme de U (1), sont ménagées des cames de guidage (15) en forme d'arc de cercle, qui s'étendent à distance des emplacements de palier (12) ou en coïncidence avec l'axe de pivotement, dans lesquelles s'engagent des goujons d'enclenchement (13) respectifs montés soit en translation axiale sur le dossier (4) soit de manière fixe, ou des tenons de vissage de vis de serrage respectives, qui sont guidés dans la came de guidage (15) et qui sont fixés dans les différentes positions de réglage du dossier (4) par des organes ou des moyens d'immobilisation.

6. Siège pour bébés selon les revendications 4 et 5, **caractérisé en ce que**, dans la came de guidage (15), sont prévus des emplacements de palier agrandis sous forme de traversées (14), et **en ce qu'**un premier tronçon de goujon à enclenchement d'un goujon à enclenchement (13) monté en translation longitudinale coulisse dans la came de guidage (15) et un second tronçon d'enclenchement du goujon à enclenchement (13), prévu dans le prolongement et présentant un diamètre agrandi, s'engage en enclenchement dans les traversées (14).

7. Siège pour bébés selon l'une ou l'autre des revendications 4 et 6, **caractérisé en ce que** le goujon à enclenchement (13) présente, du côté extérieur à l'extrémité qui dépasse de la paroi latérale respective (2a, 2b) du support en forme de U (1), un capuchon à pression dont le diamètre est supérieur au diamètre des traversées (14).

8. Siège pour bébés selon la revendication 1, **caractérisé en ce qu'**il est prévu des moyens de guidage (5, 6) et/ou des moyens de fixation pour fixer le parcours de la ceinture d'épaule et/ou de la ceinture de bassin d'une ceinture de sécurité du véhicule, au moins sur la face postérieure du tronçon du dossier (4) qui dépasse des parois latérales (2a, 2b) dans une position d'utilisation et/ou de façon opposée du côté avant sur les parois latérales (2a, 2b), du côté supérieur et/ou du côté inférieur, ou encore du côté inférieur au niveau des parties de liaison des parois latérales du support (1).

9. Siège pour bébés selon la revendication 1, **caractérisé en ce que** l'arceau de transport (17) est réalisé avec une longueur telle, ou susceptible d'être prolongé de manière télescopique, qu'en utilisant le siège pour bébés à titre de siège embarqué sur un siège de véhicule, il est susceptible de pivoter par-dessus la partie antérieure du support en forme de U (1) avec la partie formant assise (3) et s'appuie sur le dossier du siège de véhicule, et est arrêté dans la position de pivotement, ou s'applique par au moins un bras contre une butée (33) sur la paroi latérale (2a, 2b), ou est encore fixé de façon détachable sur celle-ci, ou **en ce que** l'arceau de transport, dans une position ou dans un mode de réalisation raccourci(e), s'étend à la manière d'un arceau de sécurité au-dessus des jambes d'un enfant assis dans le siège pour bébés.

10. Siège pour bébés selon l'une ou l'autre des revendications 8 et 9, **caractérisé en ce que** sur l'un au moins des bras de l'arceau de transport (17) est prévu au moins un organe de guidage (6) et/ou de fixation pour la ceinture abdominale ou le tronçon de ceinture abdominale du système de ceinture de sécurité du véhicule.

11. Siège pour bébés selon l'une des revendications 1, 9 ou 10, **caractérisé en ce que** la face antérieure du support (1) ou les côtés antérieurs des parois latérales (2a, 2b) ou de la partie de liaison antérieure, ou partie de fond (22), s'applique contre le dossier du siège de véhicule.

12. Siège pour bébés selon l'une des revendications 1, ou 8 à 11, **caractérisé en ce que** la partie de fond (22) dépasse au-delà des parois latérales (2a, 2b) au moins du côté antérieur, et **en ce qu'**elle est réalisée sous forme rectiligne ou cintrée.

13. Siège pour bébés selon la revendication 1, **caractérisé en ce qu'**il est prévu sur le support (1) des connecteurs pour fixer le support (1) sur des organes de maintien d'un système de fixation ISOFIX sur le siège de véhicule, lesdits connecteurs étant de préférence prévus avec possibilité de translation longitudinale sur la face inférieure du support et présentant à leurs extrémités des systèmes à serrure pour l'enclenchement sur des goujons transversaux des organes de maintien, ou **en ce que**, sur les parois latérales (2a, 2b) du support (1) au-dessous des coques de palier (18) de l'arceau de transport (17) monté en pivotement aux emplacements de palier (12) sur les parois latérales (2a, 2b), sont prévus des guidages ou des canaux de guidage (36) destinés à recevoir des éléments de maintien (37) dépassant vers le haut sur des éléments de support (38) dans un châssis (39) d'une poussette de bébé ou de poupée à quatre roues ou à trois roues, ou sur des éléments de maintien d'un adaptateur susceptible d'être posé sur un siège du véhicule et pourvu de connecteurs pour la fixation sur des organes de maintien du système de fixation ISOFIX sur le siège de véhicule, et **en ce que**, sur au moins une coque de palier (18), sont prévus des moyens de fixation (40) qui, lors du déplacement de l'arceau de transport (17) depuis une position de transport vers une position pivotée, coopèrent avec des moyens de fixation correspondants sur l'élément de maintien associé (37) de telle façon que le support (1) est maintenu de façon assurée sur l'élément de maintien (37) à l'encontre d'une extraction et ne peut être enlevé des éléments de maintien (37) que par pivotement de l'arceau de transport (17) en retour dans la position de transport.

14. Siège pour bébés selon la revendication 1, **caractérisé en ce que** la partie formant assise (3) est fixée par son extrémité postérieure avec possibilité de pivotement sur les parois latérales (2a, 2b) du support en forme de U, et est susceptible de pivoter sur le côté avant vers différentes positions au moyen d'un dispositif de réglage angulaire, ou est constitué par une pièce d'insert fixée.

15. Siège pour bébés selon l'une des revendications 1 à 7, **caractérisé en ce que** la partie formant assise (3) est articulée par son extrémité arrière avec possibilité de pivotement sur l'extrémité inférieure du dossier (4).

16. Siège pour bébés selon l'une des revendications 1 à 7, 14 ou 15, **caractérisé en ce que** la partie formant assise (3) est guidée du côté avant par des goujons de guidages latéraux (21) dans des cames de guidage (20) ou dans des coulisses dans les parois latérales (2a, 2b) du support en forme de U (1), et **en ce qu'**elle est fixée ou susceptible d'y être fixée dans différentes positions.

17. Siège pour bébés selon l'une ou l'autre des revendications 14 et 15, **caractérisé en ce que** sur la face inférieure de la partie formant assise (3) est prévu un soutien de redressement, dans la région antérieure, qui est articulé en pivotement ou susceptible d'être immobilisé et qui attaque par la face inférieure une partie de liaison transversale dans la zone de bordure inférieure des parties latérales (2a, 2b) du support en forme de U (1) et peut être amené au moins dans une position de redressement supérieure et une position de redressement inférieure dans laquelle la surface d'assise de la partie formant assise (3) occupe une position essentiellement horizontale, ou **en ce qu'**il est prévu d'agencer un soutien de redressement sur la partie de liaison transversale qui est réalisé avec un effet cinématique inverse et qui est prévu en pivotement ou susceptible d'être immobilisé sur la partie formant assise.

18. Siège pour bébés selon la revendication 17, **caractérisé en ce que** le soutien de redressement est fixé sur la partie formant assise (3) au moyen d'une articulation à enclenchement réglable, ou **en ce que** la face inférieure du soutien de redressement est susceptible de s'enclencher, de façon à nouveau détachable, dans des évidements d'enclenchement à contour adapté sur la partie de liaison transversale entre les deux parois latérales (2a, 2b) du support en forme de U (1).

19. Siège pour bébés selon l'une des revendications précédentes, **caractérisé en ce que** la partie de liaison entre les parois latérales (2a, 2b) du support en forme de U (1) est une partie de fond (22) essentiellement complète.

20. Siège pour bébés selon l'une des revendications 1, 8 et 19, **caractérisé en ce que**, au-dessous de la partie de fond (22) et à distance de celle-ci, il est prévu en supplément une plaque de fond qui relie les parois latérales (2a, 2b) du support en forme de U (1), et **en ce que** l'espace intermédiaire est réalisé sous forme de compartiment de rangement et les ouvertures d'introduction ainsi réalisées du côté avant et/ou du côté arrière sur le support peuvent être refermées sélectivement au moyen d'un clapet, et **en ce que** les moyens de guidage pour la ceinture sont prévus sur la face inférieure de la plaque de fond.

21. Siège pour bébés selon l'une ou l'autre des revendications 1 et 12, **caractérisé en ce que** les parois latérales (2a, 2b) au moins du support en forme de U (1) dépassent au-delà de la partie formant assise (3) du côté avant d'une valeur qui correspond à la hauteur des pieds d'un petit enfant, au moins dans une position soulevée, et **en ce que** le tronçon en dépassement de la partie de fond (22) ou de la partie de liaison entre les parois latérales (2a, 2b) est réalisé sous forme d'appui-pieds pour le petit enfant.

22. Siège pour bébés selon la revendication 1, **caractérisé en ce que** le support en forme de U (1) est réalisé d'un seul tenant en matière plastique sous forme de pièce moulée.

23. Siège pour bébés selon la revendication 1, **caractérisé en ce que** la partie formant dossier (3) est une pièce moulée en matière plastique, en particulier une pièce en matière plastique dure, une pièce en matière plastique moussée ou une pièce en matière plastique soufflée.

24. Siège pour bébés selon la revendication 1, **caractérisé en ce que** la partie formant assise (3), avec ou sans parois latérales (23a, 23b), est une pièce moulée en matière plastique d'un seul tenant, en particulier une pièce en matière plastique dure, une pièce en matière plastique moussée ou une pièce en matière plastique soufflée.

25. Siège pour bébés selon la revendication 1 ou selon l'une des revendications 26 à 28, **caractérisé en ce que** les surfaces intérieures du dossier (4) et/ou de la partie formant assise (3) sont rembourrées ou présentent des inserts en matière plastique moussée.

26. Siège pour bébés selon la revendication 1, **caractérisé en ce que**, dans la partie formant dossier (4), sont prévus de façon symétrique deux rangées de traversées transversales pour le montage réglable d'une ceinture de pantalon et, sur la partie formant siège milieu, sont prévus une rangée de trous et/ou un moyen de fixation pour une ceinture de "marche", ces deux systèmes de ceinture étant reliés l'un à l'autre de manière connue, ou pouvant être reliés pour retenir le petit enfant dans le siège.

27. Siège pour bébés selon la revendication 1, **caractérisé en ce que**, à titre de moyens de fixation (7, 8), sont prévus des goujons d'arrêt en saillie, ou **en ce qu'**il est prévu un arceau de maintien (34) en dépassement et de préférence coudé vers le bas, qui sont échangeables par des éléments plus longs et/ou par des éléments comportant des tenons de montage plus longs, qui peuvent être accrochés, au moyen de tronçons à conformation coudée, dans des logements dans des organes de maintien dans un châssis de poussette pour bébés, et peuvent y être montés de façon bloquée, ou qui peuvent être mis en place dans des logements de guidage sur des supports et y être maintenus de façon bloquée, lesdits supports étant fixés dans le châssis de poussette.

28. Siège pour bébés selon la revendication 1, **caractérisé en ce que**, à titre de moyens de fixation (9a, 9b, 10), sont prévus des dispositifs à enfichage/serrage (11) sur la face inférieure de la partie de fond (22), lesquels peuvent être enfilés, encliquetés, ou fixés sur des tiges transversales dans le châssis de poussette.

29. Siège pour bébés selon l'une ou l'autre des revendications 1 et 13, **caractérisé en ce que** des dispositions en hauteur des parties de liaison de fond prévues du côté frontal ou les distances entre les parois latérales (2a, 2b) du support en forme de U (1) sont ainsi choisies que, lorsque la partie formant dossier (4) et la partie formant assise (3) sont rabattues vers le bas, il se présente une surface de couchage plane continue.

30. Siège pour bébés selon la revendication 8, **caractérisé en ce que** les moyens de guidage (5) pour la ceinture d'épaule transversale de la ceinture de sécurité du véhicule sont positionnés sur la face postérieure de la partie formant dossier (4) de telle manière que, dans la situation basculée de la partie formant dossier (4) entre les parois latérales (2a, 2b) du support en forme de U (1), ceux-ci ne sont pas accessibles.

31. Siège pour bébés selon la revendication 16, **caractérisé en ce que** les cames de guidage (20) ou les coulisses sont agencées essentiellement sur un tracé oblique dans les parois latérales (2a, 2b), et ceci en montant de l'avant vers l'arrière.

32. Siège pour bébés selon la revendication 1, **caractérisé en ce que**, sur les parois latérales (2a, 2b) du support en forme de U (1) et au moins dans la région de la partie formant assise, sont prévus des points de fixation (25) ou des organes de maintien, pour la fixation de pièces enfichables et/ou pour la fixation d'un recouvrement (24) et/ou d'un capot protecteur du côté extérieur, sur lesquels peut être fixé le recouvrement ou le capot protecteur en matériau textile ou en matière plastique, ledit recouvrement (24) ou ledit capot en matière plastique recouvrant de manière protectrice au moins la région des pieds et au moins une région partielle des jambes du petit enfant.

33. Siège pour bébés selon l'une des revendications 1, 8 et 10, **caractérisé en ce que** sur les parois latérales (2a, 2b) dans la région postérieure et/ou sur la partie formant dossier (4) et/ou sur les parois latérales (11a, 11b) de la partie formant dossier (4) sont prévus au moins des points de fixation et des moyens pour fixer un capot protège-tête (26).

34. Siège pour bébés selon l'une ou l'autre des revendications 1 et 33, **caractérisé en ce que** dans la zone de bordure de la partie de tête en dépassement du dossier (4) sont prévus des moyens de fixation (35) pour la fixation d'une partie de paroi transversale ou pour le capot protège-tête (26).

35. Siège pour bébés selon la revendication 33, **caractérisé en ce que** le capot est un capot repliable, ou un capot d'une seule pièce en matière plastique et réalisé sous forme de pièce moulée.

36. Siège pour bébés selon l'une ou l'autre des revendications 1 et 8, **caractérisé en ce qu'**il comporte, sur la face inférieure de la partie de fond (22) et/ou sur l'une au moins des parois latérales (2a, 2b) du support (1) du côté supérieur, des guidages ou des moyens de fixation, agencés de façon décalée en direction longitudinale, pour recevoir une ceinture de bassin d'une ceinture de sécurité du véhicule, et **en ce que** le siège pour bébés est susceptible d'être fixé au moyen de celle-ci à la manière d'un lit de bébé posé en direction longitudinale sur le siège du véhicule.

37. Siège pour bébés selon la revendication 1, **caractérisé en ce que** la partie formant assise (3) est conformée à titre de partie de fond du support (1) et est constituée d'un tronçon d'assise et d'un tronçon jambe/pied qui soutient les cuisses de l'enfant, en descendant du côté avant.

38. Siège pour bébés selon l'une des revendications 1, 35 et 36, **caractérisé en ce que** le support (1) comporte à l'extrémité d'assise une sous-structure (31) ou un soutien redressable modifiant l'angle du fond, qui soulève l'extrémité par rapport au point d'appui arrière.

39. Siège pour bébés selon l'une des revendications 1, 2 et 3, **caractérisé en ce que** la partie formant dossier (4) est réglable quant à son angle d'inclinaison au moyen d'éléments de soutien réglables et de préférence susceptibles d'être bloqués, entre la partie formant dossier (4) et la partie de fond (22), et **en ce que** les éléments de soutien sont ancrés et/ou fixés en pivotement sur la partie de fond (22), sur la partie de liaison transversale, ou sur la partie formant dossier (4), en particulier à la face inférieure, et sont susceptibles d'être fixés à des emplacements de montage sur la partie correspondante.

40. Siège pour bébés selon la revendication 13, **caractérisé en ce qu'**il est prévu à titre de moyens de fixation (40) un crochet sur la paroi enveloppe de la coque de palier (18), lequel engage par l'arrière un goujon ou un rivet (42) prévu sur l'élément de maintien (37), dans la position pivotée de blocage, ou **en ce que** l'élément de maintien (37) présente du côté supérieur un évidement de logement adapté au diamètre de la coque de palier (18) avec une largeur d'ouverture du côté supérieur inférieure au diamètre de la coque de palier, et **en ce que** la coque de palier (18) présente, symétriquement par rapport à l'axe longitudinal des bras de l'arceau de transport (17), des méplats latéraux qui forment un guidage à faces parallèles, dont la distance correspond à la largeur d'ouverture du côté supérieur de l'évidement de logement, et **en ce que**, après mise en place de la coque de palier (18) dans la position de transport de l'arceau de transport (17), par pivotement de l'arceau de transport (17), la partie la plus longue du guidage, qui correspond au diamètre, bloque le siège pour bébés par coopération de formes.

41. Siège pour bébés selon l'une des revendications précédentes, **caractérisé en ce qu'**il est réalisé sous forme de siège de poupées, à échelle correspondante.
